(19) Europäisches Patentamt
European Patent Office
Office européen des brevets

(11) **EP 2 849 095 A1**

(12) **EUROPEAN PATENT APPLICATION**
published in accordance with Art. 153(4) EPC

(43) Date of publication:
**18.03.2015 Bulletin 2015/12**

(21) Application number: **13788418.5**

(22) Date of filing: **25.04.2013**

(51) Int Cl.:
*G06F 17/30* (2006.01)

(86) International application number:
**PCT/JP2013/062167**

(87) International publication number:
**WO 2013/168582 (14.11.2013 Gazette 2013/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.05.2012 JP 2012109338**

(71) Applicant: **Sony Corporation**
**Tokyo 108-0075 (JP)**

(72) Inventor: **TATENO Kei**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)     The present technology relates to an information processing apparatus, an information processing method, and a program capable of offering a more accurate taste of a user.

A presented contents selecting unit selects a plurality of items dissimilar to each other from a group of items used by a presented user as a target presented to a user. A display control unit allows the plurality of selected items to be presented to the user together with information about the presented user. The present technology is applicable to a server providing social services, for example.

*FIG. 5*

**Description**

TECHNICAL FIELD

The present technology relates to an information processing apparatus, an information processing method, and a program, and more particularly to an information processing apparatus, an information processing method, and a program suitable for offering social services.

BACKGROUND ART

In recent years, with rapid development of contents distribution services such as music and movie distribution services, various technologies for searching various items, including contents, have been proposed.

For example, such a method is known which vectorizes feature values of items, and uses Euclidean distances between vectors to search an item similar to a targeted item. Another known method employs a technique of item-based collaborative filtering which uses an evaluation history of a user to search an item similar to a targeted item (e.g., see Patent Document 1).

In addition, in offering information about other users, a certain service of conventional social services presents histories of item (such as contents) use of the users so as to clarify the tastes of the users. In this case, items recently used by the users, or items frequently used by the users are often selected, for example.

CITATION LIST

PATENT DOCUMENT

Patent Document 1: Japanese Patent Application Laid-Open No. 2012-3359

SUMMARY OF THE INVENTION

PROBLEMS TO BE SOLVED BY THE INVENTION

However, when items recently used or items frequently used are selected for presentation, it is highly probable that only similar items are presented. In this case, biased tastes of the users may be given.

Accordingly, the present technology aims at offering more accurate tastes of users.

SOLUTIONS TO PROBLEMS

An information processing apparatus according to an aspect of the present technology includes: an item selecting unit selecting a plurality of items dissimilar to each other from a group of items used by a presented user as a target presented to a user; and a presentation control unit allowing the plurality of selected items to be presented to the user together with information about the presented user.

The item selecting unit may be made to limit the number of items overlapping each other between the presented users when the plurality of presented users are presented to the user.

The item selecting unit may be made to calculate distances between a selected group of the items and the remaining items based on feature values of the items, and to select an item having the maximum distance when a new item is selected from the group of items used by the presented user.

The item selecting unit may be made to select a plurality of items from items previously used by the user and included in the group of items used by the presented user.

A recommended user selecting unit calculating an expected value of variation of an action of the user, which variation is produced by presentation of a plurality of choices of users to be recommended to the user, and selecting a recommended user to be recommended to the user from the choices of the users based on the calculated expected value may be further included. The item selecting unit may be made to select a plurality of items dissimilar to each other from a group of items used by the recommended user. The presentation control unit may be made to allow the plurality of selected items to be presented to the user together with information about the recommended user.

The recommended user selecting unit may be made to calculate the expected value based on a probability that the user accepts the choices of users, and variation of a prediction value of an evaluation given by the user for a predetermined group of items, which variation is produced by presentation of feedback given by the choices of users.

The recommended user selecting unit may be made to calculate the expected value further based on a probability that the choices of users give feedback for respective items included in the predetermined group of items.

An information processing method according to an aspect of the present technology performed by an information processing apparatus includes the steps of: selecting a plurality of items dissimilar to each other from a group of items used by a presented user as a target presented to a user; and allowing the plurality of selected items to be presented to the user together with information about the presented user.

A program implemented by a computer according to an aspect of the present technology includes the steps of: selecting a plurality of items dissimilar to each other from a group of items used by a presented user as a target presented to a user; and allowing the plurality of selected items to be presented to the user together with information about the presented user.

According to an aspect of the present technology, a plurality of items dissimilar to each other are selected from a group of items used by a presented user as a target presented to a user. The plurality of selected items are allowed to be presented to the user together with information about the presented user.

EFFECTS OF THE INVENTION

According to an aspect of the present technology, more accurate tastes of users can be offered.

BRIEF DESCRIPTION OF DRAWINGS

Fig. 1 is a block diagram showing an information processing system to which the present technology is applied according to an embodiment.
Fig. 2 is a block diagram showing a structure example of functions of a server.
Fig. 3 is a block diagram showing a structure example of functions of a contents link creation processing unit.
Fig. 4 is a block diagram showing a structure example of functions of a recommended user selection processing unit.
Fig. 5 is a block diagram showing a structure example of functions of a presented matters setting unit.
Fig. 6 is a block diagram showing a structure example of functions of a client.
Fig. 7 is a flowchart describing a contents link creating process.
Fig. 8 shows a structure example of user history data.
Fig. 9 shows an example of feature values of contents.
Fig. 10 shows an example of a result of calculation of regression coefficients of evaluation values given by respective users for contents from feature values of the contents.
Fig. 11 shows an example of a contents link creating screen.
Fig. 12 is a flowchart describing a user recommendation learning process.
Fig. 13 shows an example of feature values of CUF tuples.
Fig. 14 shows an example of weights given to respective feature values used for creating acceptance models by CBF.
Fig. 15 is a flowchart describing a contents link sharing process.
Fig. 16 is a flowchart describing the details of a recommended user selecting process.
Fig. 17 shows an example of a result of calculation of predicted evaluation values.
Fig. 18 shows an example of a result of calculation of a user acceptance probability.
Fig. 19 shows an example of a result of calculation of feedback predicted evaluation values.
Fig. 20 is a flowchart describing the details of a presented contents selecting process.
Fig. 21 shows an example of histories of reproduction number of times of contents.
Fig. 22 shows an example of feature values of contents.
Fig. 23 shows an example of a result of calculation of Euclidean distances between respective contents.
Fig. 24 shows a display example of a recommended user list.
Fig. 25 shows a display example of a contents link list.
Fig. 26 shows another display example of the contents link list.
Fig. 27 shows a display example of a history-related list.
Fig. 28 is a block diagram showing a structure example of a computer.

MODE FOR CARRYING OUT THE INVENTION

A mode for carrying out the present technology (hereinafter referred to as an embodiment) is hereinafter described. The description will be given in the following order.

1. Embodiment
2. Modified Examples

<1. Embodiment>

[Structure Example of Information Processing System 1>

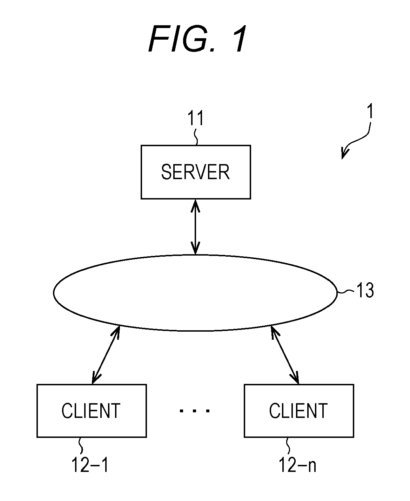

Fig. 1 is a block diagram showing an information processing system to which the present technology is applied according to an embodiment.

An information processing system 1 is configured to include a server 11 and clients 12-1 through 12-n. The server 11 and the clients 12-1 through 12-n are connected with each other via a network 13.

The clients 12-1 through 12-n are abbreviated as clients 12 when distinction between the clients 12-1 through 12-n is not needed.

The server 11 offers a service for providing distribution and recommendation of contents as a type of various items (hereinafter referred to as contents distribution service) for the respective clients 12.

The contents distribution service includes not only distribution and recommendation of contents, but also various types of services associated with distribution and recommendation of contents.

For example, the contents distribution service offers a service for supporting users in giving feedback of comments, evaluations or others for contents, and a service for collecting given feedback and supplying the feedback to users for sharing, for example.

Moreover, the contents distribution service offers a service for assisting creation of contents links functioning as links between associated contents, and a service for supplying created links to users for sharing, for example.

Furthermore, for example, the contents distribution service offers a social service function capable of establishing communicative relationships between users and other users. For example, users can follow other users, or establish friendship with other users through this function.

In this context, the phrase "users follow other users" refers to the case where a user corresponding to a following person establishes such a condition for automatically obtaining information about activities (such as comments and feedback for various contents) of another user corresponding to a followed person on the contents distribution service, for example. Additionally, the phrase "users establish friendship with other users" refers to the case where two users follow each other, for example.

Hereinafter, a user corresponding to a following person is referred to as a follower, while a user corresponding to a followed person is referred to as a followee. Accordingly, each of two users having established friendship with each other can become either a follower or a followee.

Moreover, the contents distribution service offers a service for recommending another user as well as contents, for example.

Chiefly described hereinafter is an example in which the server 11 performs distribution, recommendation or the like of music as a type of contents.

The clients 12 are constituted by devices which can use a contents distribution service offered by the server 12, such as personal computers, personal digital assistants, cellular phones, smartphones, movie players, and audio players.

[Structure Example of Server 11]

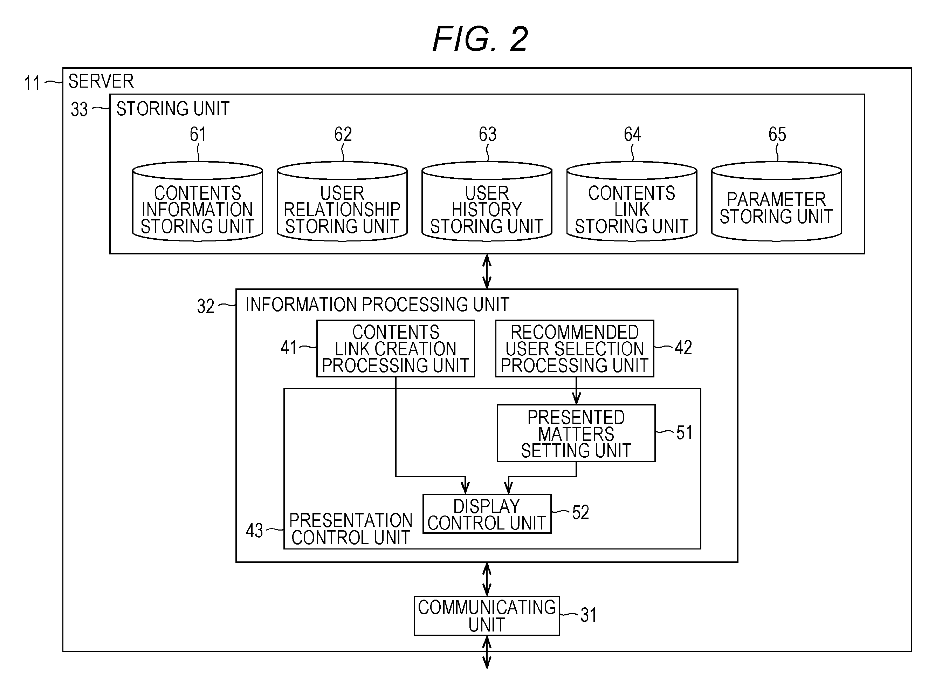

Among functions of a server 11, Fig. 2 illustrates mainly a structure example of functions of parts chiefly performing processes associated with contents links, and processes associated with presentation of information about other users.

The server 11 is configured to contain a communicating unit 31, an information processing unit 32, and a storing unit 33.

The communicating unit 31 and respective parts of the information processing unit 32 can access each other. In addition, the respective parts of the information processing unit 32 can access respective parts of the storing unit 33.

The communicating unit 31 communicates with the respective clients 12 via the network 13 to transmit and receive information, instructions and others associated with the contents distribution service.

The information processing unit 32 performs various processes associated with the contents distribution service. The information processing unit 32 is configured to contain a contents link creation processing unit 41, a recommended user selection processing unit 42, and a presentation control unit 43.

The contents link creation processing unit 41 performs a process associated with creation of a contents link. For example, the contents link creation processing unit 41 selects choices of contents of a link source and of contents of a link destination, and choices of a feature value used for connecting the two contents, and supplies the selected choices to a display control unit 52.

The contents of the link source and link destination of the contents link are hereinafter referred to as link source contents and link destination contents. The feature value used for connecting the link source contents and the link destination contents is hereinafter referred to as a link feature value.

In addition, the contents link creation processing unit 41 creates a contents link by determining the link source contents, the link destination contents, and the link feature value based on user's instructions or the like received from the client 12 via the communicating unit 31, for example. The contents link creation processing unit 41 stores contents link information indicating the created contents link in a contents link storing unit 64 of the storing unit 33.

The recommended user selection processing unit 42 performs a process associated with selection of recommended users who are to be recommended to users. The recommended user selection processing unit 42 supplies information indicating the result of selection of the recommended users to a presented matters setting unit 51 of the presentation control unit 43.

The presentation control unit 43 controls presentation of various types of information to the respective clients 12. The presentation control unit 43 is configured to contain the presented matters setting unit 51 and the display control unit 52.

The presented matters setting unit 51 sets the matters of information presented to the respective clients 12. The presented matters setting unit 51 supplies information indicating the set matters to the display control unit 52.

The display control unit 52 creates display control data used for displaying various types of information, and transmits the data to the respective clients 12 via the communicating unit 31 to control display of various types of information displayed on the respective clients 12. For example, the display control unit 52 controls display on the clients 12, such as a screen for creating a contents link, and a screen for presenting a contents link and recommended users.

The storing unit 33 stores various types of information used for the contents distribution service. The storing unit 33 is configured to contain a contents information storing unit 61, a user relationship storing unit 62, a user history storing unit 63, the contents link storing unit 64, and a parameter storing unit 65.

The contents information storing unit 61 stores contents information associated with the respective contents offered by the contents distribution service (such as feature values and metadata).

The user relationship storing unit 62 stores information about relationship between the respective users using the contents distribution service, such as friendship, and followee-follower relationship.

The user history storing unit 63 stores user histories indicating activity histories of the respective users in the contents distribution service. The user histories include use histories of the respective users, and information about feedback for contents, for example.

The contents link storing unit 64 stores contents link information associated with contents links created by the respective users.

The parameter storing unit 65 stores parameters of learning models used for selection of recommended users to be recommended to the respective users.

[Structure Example of Contents Link Creation processing unit 41]

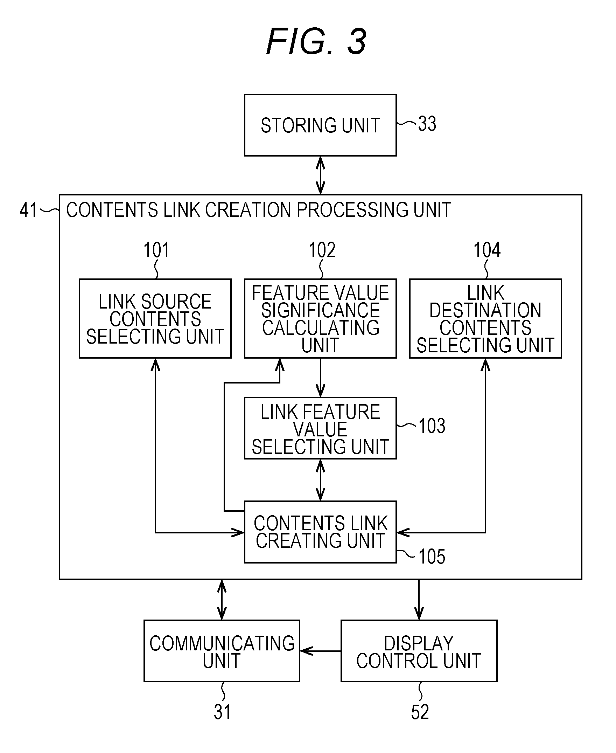

Fig. 3 illustrates a structure example of the functions of the contents link creation processing unit 41 of the server 11. The contents link creation processing unit 41 is configured to contain a link source contents selecting unit 101, a feature value significance calculating unit 102, a link feature value selecting unit 103, a link destination contents selecting unit 104, and a contents link creating unit 105.

The link source contents selecting unit 101 selects at least one choice of the link source contents based on the user histories or the like stored in the user history storing unit 63. The link source contents selecting unit 101 supplies information indicating the selected choice(s) of link source contents to the contents link creating unit 105 and the display control unit 52.

The feature value significance calculating unit 102 calculates significance of respective feature values of contents based on the contents information stored in the contents information storing unit 61, and the user histories or the like stored in the user history storing unit 63. The feature value significance calculating unit 102 supplies information indicating the result of calculated significance of the respective feature values to the link feature value selecting unit 103.

The link feature value selecting unit 103 selects at least one choice of the link feature value based on the calculated significance by the feature value significance calculating unit 102. The link feature value selecting unit 103 supplies information indicating the selected choice(s) of the link feature value to the contents link creating unit 105 and the display control unit 52.

The link destination contents selecting unit 104 selects at least one choice of the link destination contents based on the link feature value, and the contents information or the like stored in the contents information storing unit 61. The link destination contents selecting unit 104 supplies information indicating the selected choice(s) of the link destination contents to the contents link creating unit 105 and the display control unit 52.

The contents link creating unit 105 determines the link source contents, the link feature value, and the link destination contents from the respective choices based on user's instructions or the like received from the client 12 via the communicating unit 31, and creates a contents link. The contents link creating unit 105 stores contents link information indicating the created contents link in the contents link storing unit 64.

In addition, upon determination of the link source contents or the link feature value, the contents link creating unit 105 supplies information indicating the determined link source contents or link feature value to the link source contents selecting unit 101, the feature value significance calculating unit 102, the link feature value selecting unit 103, the link destination contents selecting unit 104, and the display control unit 52. Furthermore, upon determination of the link destination contents, the contents link creating unit 105 supplies information indicating the determined link destination contents to the display control unit 52.

[Structure Example of Recommended User Selection Processing Unit 42]

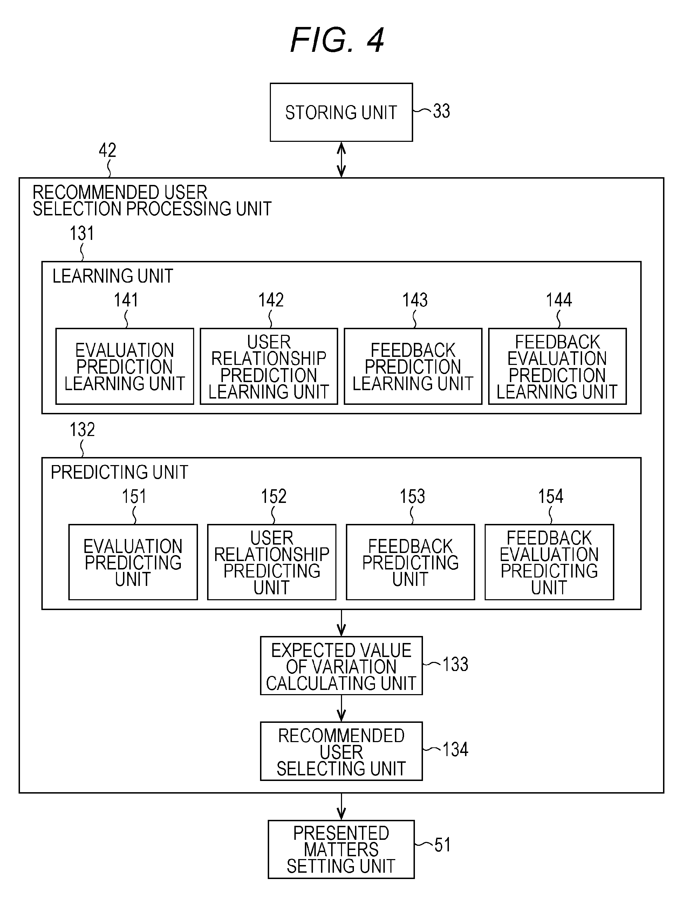

Fig. 4 illustrates a structure example of the functions of the recommended user selection processing unit 42 of the server 11. The recommended user selection processing unit 42 is configured to contain a learning unit 131, a predicting unit 132, an expected value of variation calculating unit 133, and a recommended user selecting unit 134.

The learning unit 131 learns models for prediction of parameters used for selection of recommended users to be recommended to the respective users. The learning unit 131 is configured to contain an evaluation prediction learning unit 141, a user relationship prediction learning unit 142, a feedback prediction learning unit 143, and a feedback evaluation prediction learning unit 144.

The evaluation prediction learning unit 141 creates models (hereinafter referred to as evaluation prediction models) for prediction of evaluation values given by the respective users for contents based on the contents information stored in the contents information storing unit 61, and the user histories or the like stored in the user history storing unit 63. The evaluation prediction learning unit 141 stores parameters representing the created evaluation prediction models in the parameter storing unit 65.

The user relationship prediction learning unit 142 creates models (hereinafter referred to as user relationship prediction models) for prediction of probabilities that the respective users accept other users based on user relationship information stored in the user relationship storing unit 62, and the user histories or the like stored in the user history storing unit 63. The user relationship prediction learning unit 142 stores parameters representing the created user relationship prediction models in the parameter storing unit 65.

The feedback prediction learning unit 143 creates models (hereinafter referred to as feedback prediction models) for prediction of probabilities that the respective users give feedback of comments, evaluations or the like for respective contents based on the contents information stored in the contents information storing unit 61, and the user histories or the like stored in the user history storing unit 63. The feedback prediction learning unit 143 stores parameters representing the created feedback prediction models in the parameter storing unit 65.

The feedback evaluation prediction learning unit 144 creates models (hereinafter referred to as feedback evaluation prediction models) for prediction of evaluation values given by the respective users for respective contents presented together with feedback from other users based on the contents information stored in the contents information storing unit 61, and the user histories or the like stored in the user history storing unit 63. In other words, the feedback evaluation prediction model is a model for prediction of an evaluation value given by an arbitrary user B other than an arbitrary user A for contents presented by the user A together with feedback. The feedback evaluation prediction learning unit 144 stores parameters representing the created feedback evaluation prediction models in the parameter storing unit 65.

The predicting unit 132 predicts parameters used for selection of recommended users to be recommended to the respective users while referring to the models created by the learning unit 131. The predicting unit 132 is configured to contain an evaluation predicting unit 151, a user relationship predicting unit 152, a feedback predicting unit 153, and a feedback evaluation predicting unit 154.

The evaluation predicting unit 151 predicts evaluation values given by the respective users for respective contents while referring to the evaluation prediction models stored in the parameter storing unit 65. The evaluation predicting unit 151 supplies information indicating the result of prediction to the expected value of variation calculating unit 133.

The user relationship predicting unit 152 predicts probabilities that the respective users accept other users while referring to the user relationship prediction models stored in the parameter storing unit 65. The user relationship predicting unit 152 supplies information indicating the result of prediction to the expected value of variation calculating unit 133.

The feedback predicting unit 153 predicts probabilities that the respective users give comments, evaluations or the like for respective contents while referring to the feedback prediction models stored in the parameter storing unit 65. The feedback predicting unit 153 supplies information indicating the result of prediction to the expected value of variation calculating unit 133.

The feedback evaluation predicting unit 154 predicts evaluation values given by the respective users for respective contents presented together with feedback from other users while referring to the feedback evaluation prediction models stored in the parameter storing unit 65. The feedback evaluation predicting unit 154 supplies information indicating the result of prediction to the expected value of variation calculating unit 133.

The expected value of variation calculating unit 133 calculates expected values of variation produced by differences between actions of the respective users before recommendation of other users to the respective users and actions of the respective users after the recommendation (hereinafter referred to as expected values of variation) based on the result of predictions obtained by the respective units of the predicting unit 132. The actions of the users in this context include determination whether contents are to be used or not, and evaluation for contents, for example. The expected value of variation calculating unit 133 supplies information indicating the result of calculation to the recommended user selecting unit 134.

The recommended user selecting unit 134 selects recommended users to be recommended to the respective users based on the result of calculation of the expected values of variation. In addition, the recommended user selecting unit 134 creates a recommended user ranking which lines up the selected recommended users in descending order of the expected value of variation. The recommended user selecting unit 134 supplies information indicating the created recommended user ranking to the presented matters setting unit 51.

[Structure Example of Presented Matters Setting Unit 51]

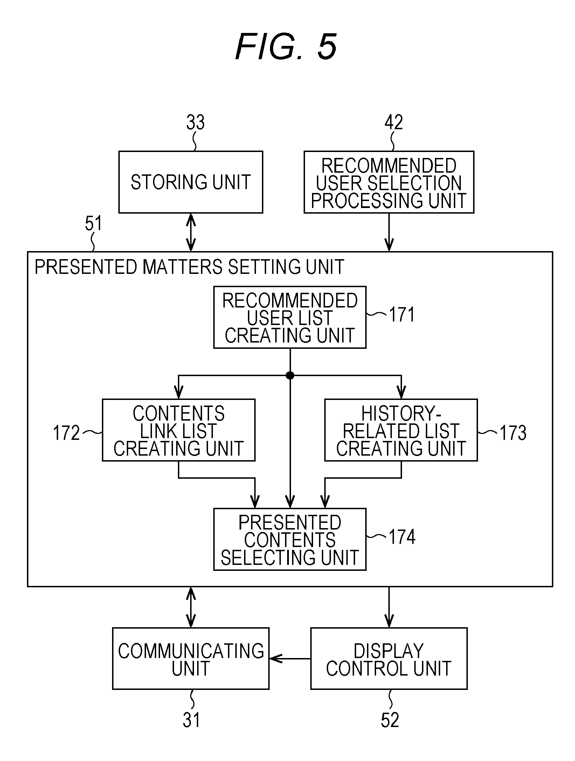

Fig. 5 illustrates a structure example of the functions of the presented matters setting unit 51 of the server 11. The presented matters setting unit 51 is configured to contain a recommended user list creating unit 171, a contents link list creating unit 172, a history-related list creating unit 173, and a presented contents selecting unit 174.

The recommended user list creating unit 171 creates a recommended user list corresponding a list of the recommended users based on the recommended user ranking. The recommended user list will be detailed later. The recommended user list creating unit 171 supplies the created recommended user list to the contents link list creating unit 172, the history-related list creating unit 173, the presented contents selecting unit 174, and the display control unit 52.

The contents link list creating unit 172 creates a contents link list corresponding to a list of contents links based on the contents link information stored in the contents link storing unit 64. The contents link list will be detailed later. The contents link list creating unit 172 supplies the created contents link list to the presented contents selecting unit 174 and the display control unit 52.

The history-related list creating unit 173 creates a history-related list integrating contents links into contents use histories of the users based on the user histories stored in the user history storing unit 63, and the contents link information stored in the contents link storing unit 64. The history-related list will be detailed later. The history-related list creating unit 173 supplies the created history-related list to the presented contents selecting unit 174 and the display control unit 52.

The presented contents selecting unit 174 selects contents presented as contents use histories of other users (hereinafter referred to as presented contents) based on the contents information stored in the contents information storing unit 61 and the user histories or the like stored in the user history storing unit 63 when information about other users are presented to the users. The presented contents selecting unit 174 supplies information indicating the result of selection of the presented contents to the display control unit 52.

[Structure Example of Clients 12]

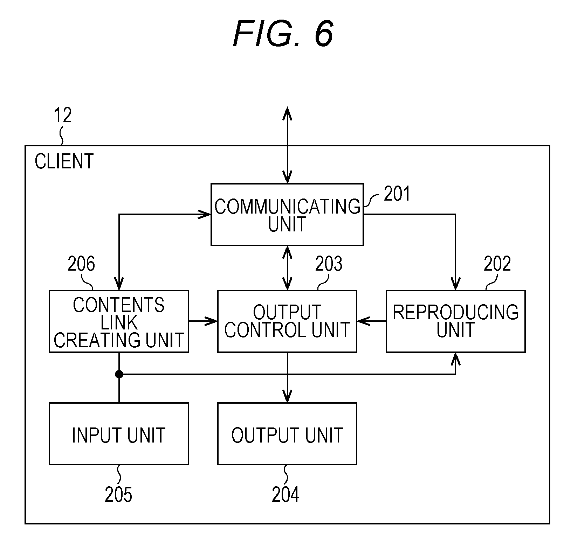

Fig. 6 illustrates a structure example of the functions of each of the clients 12. Each of the clients 12 is configured to contain a communicating unit 201, a reproducing unit 202, an output control unit 203, an output unit 204, an input unit 205, and a contents link creating unit 206.

The communicating unit 201 communicates with the server 11 via the network 13 to transmit and receive various types of information, instructions and others associated with the contents distribution service.

The reproducing unit 202 receives contents from the server 11 via the network 13 and the communicating unit 201, and reproduces the received contents. The reproducing unit 202 supplies reproduction data obtained as a result of reproduction to the output control unit 203.

The output control unit 203 receives, from the server 11 via the network 13 and the communicating unit 201, information to be presented to the users, such as information associated with contents and comments given for contents, and information to be displayed together with reproduction of contents. Moreover, the output control unit 203 controls display of dynamic images and still images, and output of voice and the like displayed on and outputted from the output unit 204. Furthermore, the output control unit 203 controls display of various types of information received from the server 11 and displayed on the output unit 204.

The output unit 204 is constituted by a display device of various types, such as a display, and an audio output device of various types, such as a speaker and an audio output terminal, for example.

The input unit 205 is constituted by an input device of various types, such as a keyboard, a mouse, a touch panel, and a microphone. The input unit 205 supplies information, instructions and the like inputted from the users to the reproducing unit 202, the output control unit 203, and the contents link creating unit 206.

The contents link creating unit 206 performs processes associated with creation of contents links while transmitting and receiving information, various types of instructions and others to and from the server 12 via the network 13 and the communicating unit 201.

[Processes Performed by Information Processing System 1]

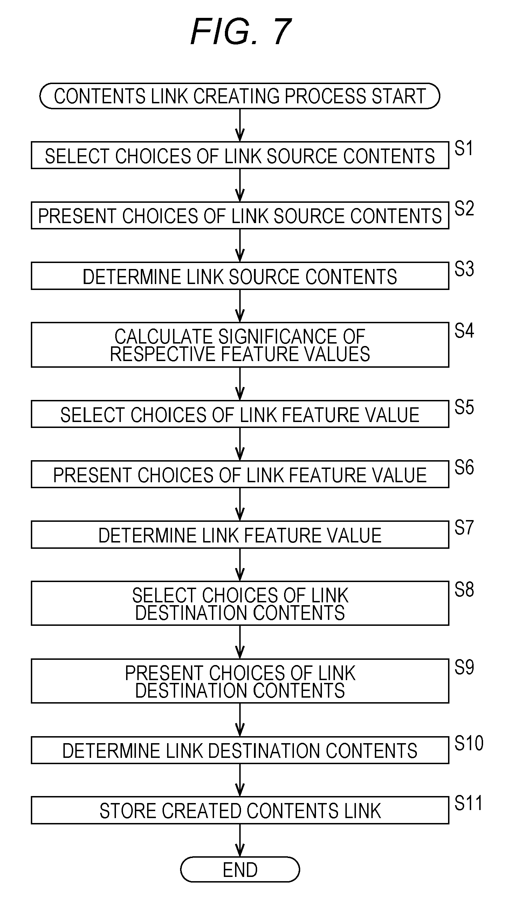

The processes performed by the information processing system 1 are hereinafter described with reference to Figs. 7 through 27.

(Contents Link Creating Process)

Initially, a contents link creating process performed by the server 11 is described with reference to a flowchart shown in Fig. 7.

This process is started when a request for creation of a contents link is transmitted to the server 11 from any one of the clients 12 via the network 13, for example.

A user who creates a contents link in this process is hereinafter referred to as an active user.

In step S1, the link source contents selecting unit 101 of the contents link creation processing unit 41 selects choices of link source contents. For example, the link source contents selecting unit 101 selects contents suited for the taste of the active user to determine the selected contents as choices of link source contents based on the user histories stored in the user history storing unit 63. The contents suited for the taste of the active user in this context include contents frequently used or highly evaluated by the active user, for example.

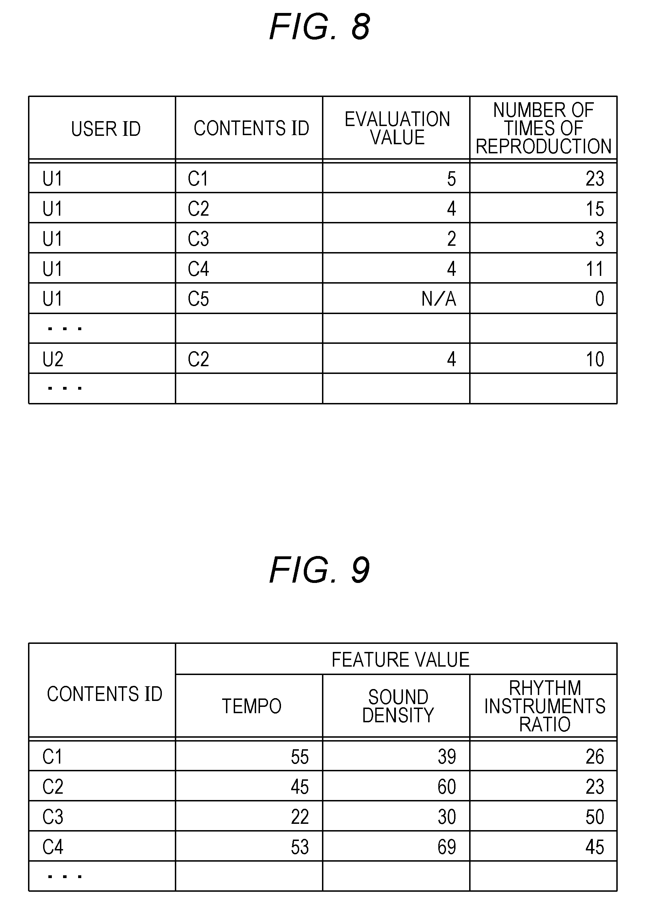

A specific example of the method for selecting the choices of link source contents is now discussed with reference to Fig. 8.

Fig. 8 shows a structure example of a part of data of the user histories stored in the user history storing unit 63. According to this example, the user histories include evaluation values given by the respective users for respective contents, and the number of times of reproduction of the contents.

For example, when the requirement set for the selection of choices of link source contents is reproduction of contents ten times or more, contents C1. C2, and C4 are selected for choices of link source contents in case of an active user of a user U1.

Then, the link source contents selecting unit 101 supplies information indicating the selected choices of link source contents to the contents link creating unit 105 and the display control unit 52.

In step S2, the server 11 presents the choices of ling source contents. More specifically, the display control unit 52 creates display control data for displaying the choices of link source contents, and transmits the data to the client 12 of the active user via the communicating unit 31.

The output control unit 203 of the client 12 of the active user receives the display control data from the server 11 via the network 13 and the communicating unit 201. The output control unit 203 allows the output unit 204 to display the choices of link source contents based on the display control data. As a result, the choices of link source contents are presented to the active user.

In step S3, the server 11 determines link source contents.

For example, the active user operates the input unit 205 of the client 12 to select a desired one from the presented choices of link source contents. At this time, the active user may be allowed to select link source contents from contents other than the presented choices of contents. The contents link creating unit 206 obtains information indicating the result of selection of the link source contents from the input unit 205, and transmits the information to the server 11 via the communicating unit 201.

The communicating unit 31 of the server 11 receives information indicating the result of selection of the link source contents from the client 12 via the network 13, and supplies the information to the contents link creating unit 105. The contents link creating unit 105 determines the contents selected by the active user as link source contents.

The contents link creating unit 105 may select link source contents from the respective choices regardless of the selection by the active user.

For example, the contents link creating unit 105 may select the contents exhibiting the highest rate of achievement of criteria for the selection of choices from the respective choices, and determine the selected contents as link source contents. For example, in the example discussed with reference to Fig. 8, the contents C1 reproduced largest number of times are selected as link source contents when the user U1 is the active user.

Alternatively, the contents link creating unit 105 may randomly select link source contents from the respective choices, for example.

The contents link creating unit 105 supplies information indicating the determined link source contents to the link source contents selecting unit 101, the feature value significance calculating unit 102, the link feature value selecting unit 103, the link destination contents selecting unit 104, and the display control unit 52.

In step S4, the feature value significance calculating unit 102 calculates significance of the respective feature values on the basis of at least either the active user or the link source contents.

Initially, an example of a method for calculating the significance of the respective feature values on the basis of the active user is discussed.

For example, it is considered that a feature value effective for prediction of an evaluation value given by the active user for contents is such a feature value which has a large effect on an evaluation given by the active user for contents and is therefore highly significant for the active user. Accordingly, the feature value significance calculating unit 102 executes regression analysis of evaluations given by the active user for contents from feature values of the contents based on the contents information stored in the contents information storing unit 61 and the user histories stored in the user history storing unit 63. Then, the feature value significance calculating unit 102 sets calculated regression coefficients for significance given by the active user for the respective feature values. When L1 regularization is applied to regression analysis (e.g., see Non-Patent Document 1), regression coefficients not contributing to prediction of evaluation values can be set to zero.

Non-Patent Document 1: Tibshirani, R., "Regression Shrinkage and Selection via the Lasso", Journal of the Royal Statistical Society, Series B, Vol. 58, No. 1, 1996

A specific example of a method for obtaining significance of feature values using regression analysis is now described with reference to Figs. 9 and 10, and Fig. 8 described above.

Fig. 9 shows a specific example of feature values of contents contained in the contents information stored in the contents information storing unit 61. According to this example, three types of feature values of tempo, sound density, and rhythm instruments ratio have been obtained.

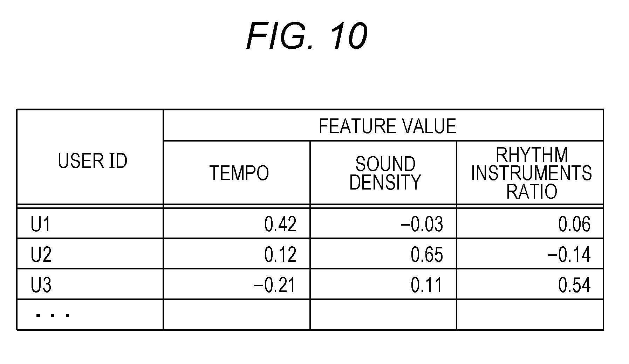

Fig. 10 shows an example of regression coefficients obtained by regression analysis of evaluation values given by the respective users for contents from the feature values of the contents based on the user histories shown in Fig. 8 and the contents feature values shown in Fig. 9. Figs. 8 and 9 show only a part of the user histories and the contents feature values. Accordingly, the data shown in Figs. 8 and 9 does not completely correspond to the result of calculation shown in Fig. 10.

Then, the respective regression coefficients shown in Fig. 10 are determined as significance given by the respective users for the respective feature values. For example, according to this example, the tempo is the feature value to which the user U1 gives the highest significance, while the sound density is the feature value to which the user U1 gives the lowest significance. On the other hand, the sound density is the feature value to which a user U2 gives the highest significance, while the rhythm instruments ratio is the feature value to which the user U2 gives the lowest significance. Further, the rhythm instruments ratio is the feature value to which a user U3 gives the highest significance, while the tempo is the feature value to which the user U3 gives the lowest significance.

Alternatively, considering that the contents links already created by the users as criteria of similarities between the users, the significance of the feature values may be learned based on those contents links.

For example, such a method is known which learns Mahalanobis distances or the like between a plurality of similar pairs when these pairs are given (e.g., see Non-Patent Document 2).

Non-Patent Document 2: Yang, L., "Distance Metric Learning: A Comprehensive Survey", Michigan State University, 2006

According to the technique of this Non-Patent Document 2, elements corresponding to respective feature values in a covariance matrix can be applied as they are as significance of the respective feature values when the covariance matrix is limited to a diagonal matrix.

Alternatively, for example, significance given by the active user for respective feature values may be established based on the histories of the link feature values used by the active user for creating contents links. For example, significance may be raised for the feature values more frequently used by the active user as the link feature values for creating previous contents links, and may be lowered for the feature values less frequently used by the active user as the link feature values for creating previous contents links.

An example of a method for calculating significance of respective feature values on the basis of link source contents is now discussed.

For example, such a method is conceivable which gives higher significance to a feature value showing a more remarkable feature of link source contents, and gives lower significance to a feature value not showing a remarkable feature of link source contents.

Examples of the feature value showing a more remarkable feature of link source contents in this context includes a feature value exhibited by the link source contents but exhibited by other contents with low probability, and on the contrary, a feature value exhibited by other contents with high probability but not exhibited by the link source contents. For example, when the link source contents belong to an extremely rare category, it is considered that category information provided as one feature value is given high significance.

In addition, when the feature values are expressed by successive values, examples of the feature value showing a remarkable feature of link source contents include a feature value of link source contents representing large deviation from the average value of the whole values. For example, when the tempo of link source contents is extremely fast or extremely slow in comparison with other average contents, it is considered that the tempo of the musical composition corresponding one of the feature values is given high significance.

The method for calculating significance of feature values discussed herein is only an example, and other methods may be employed for this calculation. Moreover, significance of feature values may be calculated on the basis of both the active user and the link source contents.

Then, the feature value significance calculating unit 102 supplies information indicating the result of calculation of significance of the respective feature values to the link feature value selecting unit 103.

In step S5, the link feature value selecting unit 103 selects choices of the link feature value. More specifically, the link feature value selecting unit 103 selects a predetermined number of feature values for choices of the link feature value in descending order of significance calculated in step S4. The link feature value selecting unit 103 supplies information indicating the selected choices of the link feature value to the contents link creating unit 105 and the display control unit 52.

In step S6, the choices of the link feature value are presented on the client 12 of the active user in a manner similar to the process in step S2.

In step S7, the server 11 determines the link feature value.

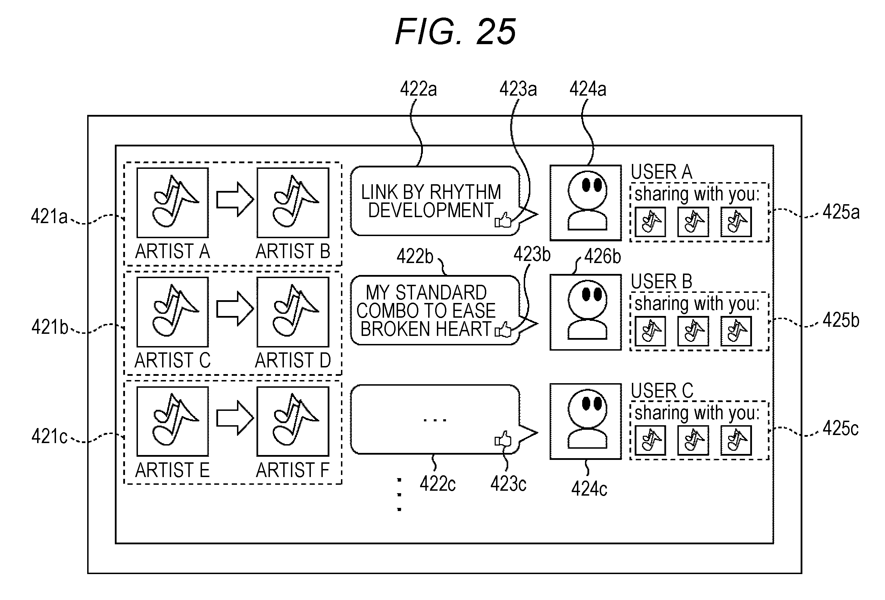

For example, the active user operates the input unit 205 of the client 12 to select one or more desired choices from the presented choices of the link feature value. In this case, the active user may be allowed to select a feature value other than the presented choices of the feature value for the link feature value by directly inputting text data or by other methods. Moreover, in this case, the active user may be allowed to input information for explaining the link feature value. This information can be displayed in a balloon 422a or the like shown in Fig. 25 described later, for example.

The contents link creating unit 206 obtains information indicating the result of selection of the link feature value from the input unit 205, and transmits the information to the server 11 via the communicating unit 201.

The communicating unit 31 of the server 11 receives the result of selection of the link feature value from the client 12 via the network 13, and supplies the information to the contents link creating unit 105. The contents link creating unit 105 determines the feature value selected by the active user as the link feature value.

The contents link creating unit 105 may select a link feature value from the respective choices regardless of the selection by the active user.

For example, the contents link creating unit 105 may select one or more feature values in descending order of significance and determine the selected feature value(s) as the link feature value(s).

Alternatively, for example, the contents link creating unit 105 may randomly select link feature value(s) from the respective choices.

The contents link creating unit 105 supplies information indicating the determined link feature value to the link source contents selecting unit 101, the feature value significance calculating unit 102, the link feature value selecting unit 103, the link destination contents selecting unit 104, and the display control unit 52.

In step S8, the link destination contents selecting unit 104 selects choices of link destination contents.

More specifically, the link destination contents selecting unit 104 calculates similarities between the link source contents and the other contents only based on the determined link feature value. For example, the link destination contents selecting unit 104 calculates Euclidean distances between the link source contents and the other contents only by using the link feature value based on the contents information stored in the contents information storing unit 61. Then, the link destination contents selecting unit 104 determines the calculated Euclidean distances as similarities between the link source contents and the respective contents. Moreover, the link destination contents selecting unit 104 selects a predetermined number of contents in descending order of similarity to the link source contents, and determines the selected contents as choices of the link destination contents.

At this time, the choices of the link destination contents may be selected from the contents previously used by the active user for facilitating selection by the active user. In this case, the range of selection of the choices of the link destination contents may be arbitrarily established in accordance with the level of the targeted use. For example, the range of selection may be constituted by a set of contents previously reproduced by the active user, or may be expanded to a set of contents previously browsed by the active user.

Then, the link destination contents selecting unit 104 supplies information indicating the selected choices of the link destination contents to the contents link creating unit 105 and the display control unit 52.

In step S9, the choices of the link destination contents are presented on the client 12 of the active user in a manner similar to the process in step S2.

In step S10, the server 11 determines the link destination contents.

For example, the active user operates the input unit 205 of the client 12 to select one desired choice from the choices of the presented link destination contents. In this case, the active user may be allowed to select link destination contents from contents other than the presented choices. The contents link creating unit 206 obtains information indicating the result of selection of the link destination contents from the input unit 205, and transmits the information to the server 11 via the communicating unit 201.

The communicating unit 31 of the server 11 receives information indicating the result of selection of the link destination contents from the client 12 via the network 13, and supplies the information to the contents link creating unit 105. The contents link creating unit 105 determines the contents selected by the active user as the link destination contents.

The contents link creating unit 105 may select link destination contents from the respective choices regardless of selection by the active user.

For example, the contents link creating unit 105 may select from the respective choices the contents having the highest similarity to the link source contents with regard to the link feature value, and determine the selected contents as the link destination contents.

Alternatively, for example, the contents link creating unit 105 may randomly selects link destination contents from the respective choices.

Then, the contents link creating unit 105 supplies information indicating the determined link destination contents to the display control unit 52.

In step S11, the contents link creating unit 105 stores the created contents link. More specifically, the contents link creating unit 105 stores in the contents link storing unit 64 the link source contents and the link destination contents constituting the created contents link, the used link feature value, and information about the active user who has created the contents link (such as user ID) in association with one another.

Thereafter, the content link creating process ends.

As in the manner described above, the respective choices of the link source contents, the link feature value, and the link destination contents are presented in accordance with the taste, action and the like of the active user. Accordingly, the highly satisfactory contents link can be easily created. Moreover, the contents similar to the link source contents are presented as choices of the link destination contents based on the selected link feature value. Thus, the active user is allowed to find link destination contents associated with the link source contents from various points of view. As a consequence, contents link constituted by an appropriate combination of contents can be easily created.

According to the foregoing description, the example which sequentially presents choices of the link source contents, the link feature value, and the link destination contents, and sequentially determines the respective contents and value. However, these contents and value may be presented at a time, and determined at a time.

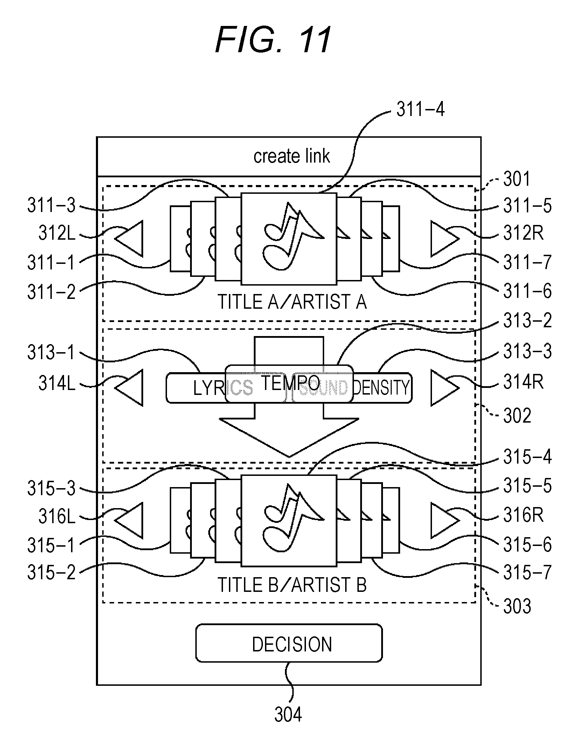

Fig. 11 shows an example of a contents link creating screen displayed on the client 12 when choices of the link source contents, the link feature value, and the link destination contents are presented at a time and determined at a time. Dotted lines in the figure are additional lines for explanation, and not displayed in practical cases.

This contents link creating screen is divided into a link source contents display area 301, a link feature value display area 302, and a link destination contents display area 303. Furthermore, a decision button 304 is disposed below the link destination contents display area 303.

Icons 311-1 through 311-7, and buttons 312L and 312R are shown in the link source contents display area 301. The icons 311-1 through 311-7 represent respective choices of the link source contents, and are expressed by jackets of albums or singles containing the corresponding contents (musical compositions), or by images of artists, for example.

The icons 311-1 through 311-7 are abbreviated as icons 311 when distinction between the respective icons 311-1 through 311-7 is not needed.

When the button 312L is pressed, the respective icons 311 scroll in the left direction. At this time, the icon 311 displayed at the left end disappears, and the icon 311 corresponding to a choice of the link source contents and positioned out of the screen, if any, appears at the right end. On the other hand, when the button 312R is pressed, the respective icons 311 scroll in the right direction. At this time, the icon 311 displayed at the right end disappears, and the icon 311 corresponding to a choice of the link source contents and positioned out of the screen, if any, appears at the left end. In case of display on a touch screen, the icons 311 may be made to scroll by flick operation.

The contents corresponding to the icon 311 displayed in a large size at the center become the link source contents selected at that time. Accordingly, selection of the link source contents can be switched by scrolling the icons 311 to the left or to the right to change the icon 311 displayed at the center. In addition, the title and the artist name of the contents corresponding to the icon 311 displayed at the center are displayed below the corresponding icon.

Icons 313-1 through 313-3, and buttons 314L and 314R are displayed in the link feature value display area 302. Each of the icons 313-1 through 313-3 represents a choice of the link feature value, and expressed by display of a character string representing a link feature value, for example.

The icons 313-1 through 313-3 are abbreviated as icons 313 when distinction between the respective icons 313-1 through 313-3 is not needed.

When the button 314L is pressed, the respective icons 313 scroll in the left direction. At this time, the icon 313 displayed at the left end disappears, and the icon 313 corresponding to a choice of the link feature value and positioned out of the screen, if any, appears at the right end. On the other hand, when the button 314R is pressed, the respective icons 313 scroll in the right direction. At this time, the icon 313 displayed at the right end disappears, and the icon 313 corresponding to a choice of the link feature value and positioned out of the screen, if any, appears at the left end. In case of display on a touch screen, the icons 313 may be made to scroll by flick operation.

The feature value corresponding to the icon 313 displayed in a large size at the center become the link feature value selected at that time. Accordingly, selection of the link feature value can be switched by scrolling the icons 313 to the left or to the right to change the icon 313 displayed at the center.

Icons 315-1 through 315-7, and buttons 316L and 316R are shown in the link destination contents display area 303. The icons 315-1 through 315-7 represent respective choices of the link destination contents, and are expressed by jackets of albums or singles containing the corresponding contents (musical compositions), or by images of artists, for example.

The icons 315-1 through 315-7 are abbreviated as icons 315 when distinction between the respective icons 315-1 through 315-7 is not needed.

When the button 316L is pressed, the respective icons 315 scroll in the left direction. At this time, the icon 315 displayed at the left end disappears, and the icon 315 corresponding to a choice of the link destination contents and positioned out of the screen, if any, appears at the right end. On the other hand, when the button 316R is pressed, the respective icons 315 scroll in the right direction. At this time, the icon 315 displayed at the right end disappears, and the icon 315 corresponding to a choice of the link destination contents and positioned out of the screen, if any, appears at the left end. In case of display on a touch screen, the icons 315 may be made to scroll by flick operation.

The contents corresponding to the icon 315 displayed in a large size at the center become the link destination contents selected at that time. Accordingly, selection of the link destination contents can be switched by scrolling the icons 315 to the left or to the right to change the icon 315 displayed at the center. In addition, the title and the artist name of the contents corresponding to the icon 315 displayed at the center are displayed below the corresponding icon.

When selection of the link source contents is switched, for example, the choices of the link destination contents are changed based on the link source contents and the link feature value selected at that time. In accordance with this change, the icons 315 in the link destination contents display area 303 are renewed to icons representing choices of the link destination contents after the change.

When the choices of the link feature value are selected on the basis of the link source contents, the display of the choices of the link feature value may be renewed in accordance with the change of the link source contents. Then, the display of the choices of the link destination contents may be renewed in accordance with the changes of the link source contents and the link feature value.

Similarly, when selection of the link feature value is switched, the choices of the link destination contents are renewed based on the link source contents and the link feature value selected at that time. In accordance with this change, the icons 315 in the link destination contents display area 303 are renewed to icons representing the choices of the link destination contents after the change.

Then, the active user presses the decision button 304 when a desired combination are obtained in accordance with individual changes of the link source contents, the link feature value, and the link destination contents. The press of this button allows creation of a contents link constituted by the combination of the link source contents, the link feature value, and the link destination contents selected at that time.

In the manner discussed above, the active user can create a contents link while checking the combination of the link source contents, the link feature value, and the link destination contents on one screen. Moreover, until press of the decision button, the active user can freely change the link source contents, the link feature value, and the link destination contents. Accordingly, the active user can create a desired contents link more easily.

(User Recommendation Learning Process)

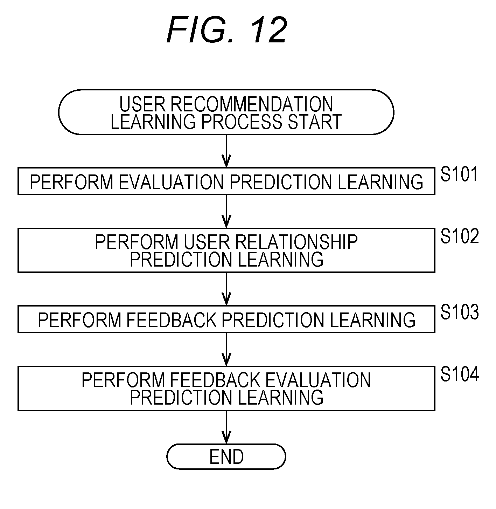

A user recommendation learning process performed by the server 11 is hereinafter described with reference to a flowchart shown in Fig. 12.

This process is executed regularly, or when predetermined requirements are met, for example. The predetermined requirements in this context include addition or deletion of a user, and input of instructions to the server 11 to request execution of the user recommendation learning process, for example.

In step S101, the evaluation prediction learning unit 141 performs evaluation prediction learning. More specifically, the evaluation prediction learning unit 141 creates evaluation prediction models for prediction of evaluation values (such as likes and dislikes, and five-grade evaluations) given by the respective users for contents by using a predetermined learning method, based on the contents information stored in the contents information storing unit 61, and the user histories or the like stored in the user history storing unit 63.

The learning method employed by the evaluation prediction learning unit 141 may be an arbitrary method, including a method described in following Non-Patent Document 3, for example.

Non-Patent Document 3: Su, X., Khoshgoftaar, T. M., "A survey of Collaborative Filtering Techniques", Advances in Artificial Intelligence, vol. 2009, 2009

The evaluation prediction learning unit 141 stores parameters representing the created evaluation prediction models in the parameter storing unit 65.

In step S102, the user relationship prediction learning unit 142 performs user relationship prediction learning. More specifically, the user relationship prediction learning unit 142 creates user relationship prediction models for prediction of probabilities that the respective users accept other users by using a predetermined learning method, based on the user relationship information stored in the user relationship storing unit 62, and user histories or the like stored in the user history storing unit 63.

The probability that a user A accepts a user B in this context means the probability that the user A establishes friendship with the user B, or follows the user B on the contents distribution service, for example. In other words, the probability in this context means the probability that the user A becomes a follower of the user B.

The learning method employed by the user relationship prediction learning unit 142 may be an arbitrary method, including a method described in following Non-Patent Document 4, for example.

Non-Patent Document 4: Hasan, M. A., Zaki, M. J., "A Survey of Link Prediction in Social Networks", Social Network Data Analytics, Springer, 2011

The user relationship prediction learning unit 142 stores parameters representing the created user relationship prediction models in the parameter storing unit 65.

In step S103, the feedback prediction learning unit 143 performs feedback prediction learning. More specifically, the feedback prediction learning unit 143 creates feedback prediction models for prediction of probabilities that the respective users give feedback such as comments and evaluations for respective contents by using a predetermined learning method, based on the contents information stored in the contents information storing unit 61, and the user histories or the like stored in the user history storing unit 63.

The learning method employed by the feedback prediction learning unit 143 may be an arbitrary method, including a method described in following Non-Patent Document 5, for example.

Non-Patent Document 5: Zhang, Y., et al., "Sentiment Analysis for Online Reviews Using an Author-Review-Object Model", Asia Information Retrieval Societies Conference, 2011

The feedback prediction learning unit 143 stores parameters representing the created feedback prediction models in the parameter storing unit 65.

In step S104, the feedback evaluation prediction learning unit 144 performs feedback evaluation prediction learning. More specifically, the feedback evaluation prediction learning unit 144 creates feedback evaluation prediction models for prediction of evaluations given by the respective users for respective contents presented together with feedback from other users by using a predetermined learning method, based on the contents information stored in the contents information storing unit 61, and the user histories or the like stored in the user history storing unit 63.

The learning method employed by the feedback evaluation prediction learning unit 144 may be an arbitrary method, including a method described in Japanese Patent Application No. 2011-168975 (hereinafter referred to as Patent Document 2) filed by the same applicant as that of the present application, for example.

The method described in Patent Document 2 is briefly described herein.

For example, when feedback for contents and a user giving the feedback are presented together with the contents, the feedback evaluation prediction learning unit 144 collects data of the feedback (hereinafter referred to as meta-feedback) given by the presented user for the presented combination (hereinafter referred to as CUF tuple). Moreover, the feedback evaluation prediction learning unit 144 determines whether the collected meta-feedback is positive or negative.

Then, the feedback evaluation prediction learning unit 144 creates an acceptance model for the CUF tuple by employing a determining method such as support vector machine and logistic regression (e.g., see Non-Patent Document 6), assuming that each of the feature value of the user, the feature value of the contents, and the feature value of the feedback as one vector, and that the positive determination result and the negative determination result of the meta-feedback as a positive example and a negative example, respectively.

Non-Patent Document 6: Bishop C. M., "Pattern Recognition and Machine Learning", Springer-Verlag, 2006

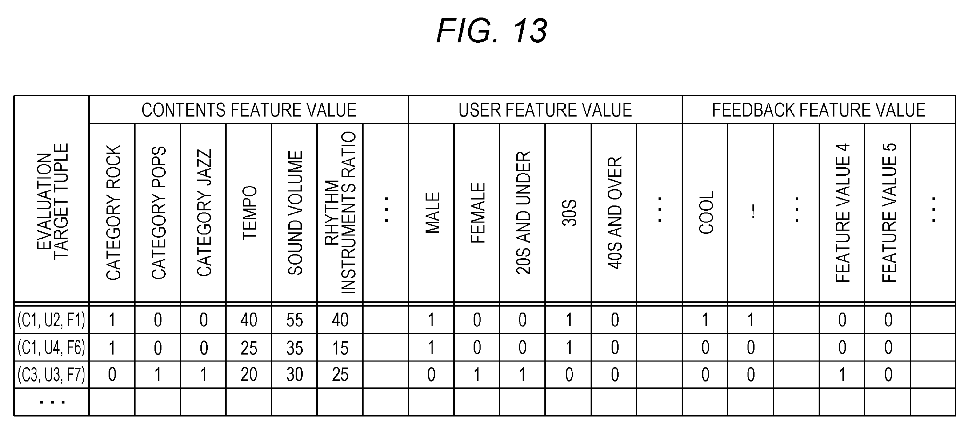

For example, feature value vectors of CUF tuples are expressed as shown in Fig. 13. Each value in the columns in Fig. 13 represents a feature value contained in the corresponding evaluation target tuple shown in the first row for the corresponding item shown in the second or the following row of the contents, user, and feedback. For example, the first record in Fig. 13 shows feature values contained in a (C1. U2, F2) tuple as an evaluation target tuple for the contents, user, and feedback. More specifically, feature values of contents C1 for the respective items of "category rock", "category pops", "category jazz", "tempo", "sound volume", and "rhythm instruments ratio" are 1, 0, 0, 40, 55, and 40, respectively. The feature values of a user U1 for the respective items of "male", "female", "20s or under", "30s", and "40s or over" are 1, 0, 0, 1, 0, respectively. The feature values of feedback FI for the respective items of "cool", "!", a feature value 4, and a feature value 5 are 1, 1, 0, and 0, respectively.

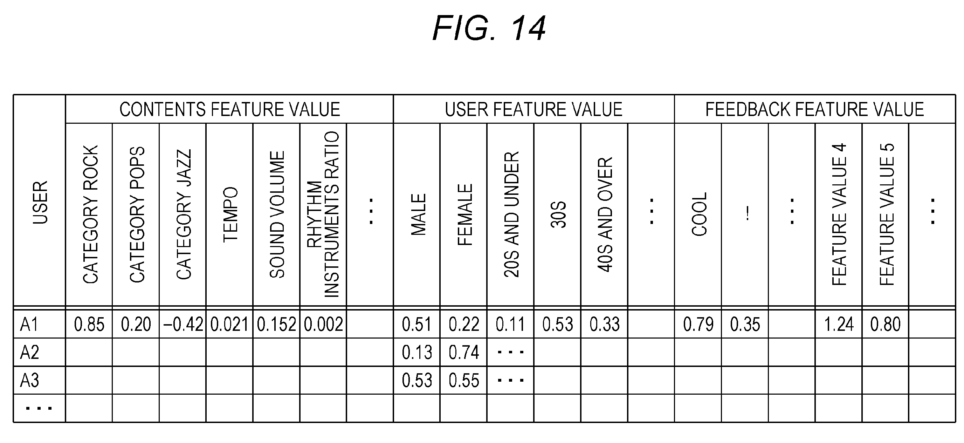

Then, a weight to be given to each feature value for calculating a predicted degree of acceptance of the corresponding CUF tuple by the respective users is obtained by learning which uses logistic regression or other methods, based on the result of determination of the meta-feedback as shown in Fig. 14.

Each value in the respective columns in Fig. 14 shows a weight given to the corresponding user shown in the first row for the corresponding item shown in the second or the following row. For example, the first record in Fig. 14 shows the weights given to a user A1 for the respective items. More specifically, the weights given to the user A1 for the respective items of "category rock", "category pops", "category jazz", "tempo", "sound volume", and "rhythm instruments ratio" for contents are 0.85, 0.20, -0.42, 0.021, 0.152, and 0.002, respectively. The weights given to the user A1 for the respective items of "male", "female", "20s or under", "30s", and "40s or over" for users are 0.51, 0.22, 0.11, 0.53, and 0.33, respectively. The weights given to the user A1 for the respective items of "cool", "!", the feature value 4, and the feature value 5 concerning feedback are 0.79, 0.35, 1.24, and 0.80, respectively.

An expression of addition using the respective weights shown in Fig. 14 generates an acceptance model. More specifically, the sum of the respective feature values contained in the CUF tuple for the contents, user, and feedback, and multiplied by the corresponding weights in Fig. 14 becomes the predicted degree of acceptance of the CUF tuple by the users.

The acceptance models of the CUF tuples by the respective users can be used as feedback evaluation prediction models for the respective users.

When the result of determination of the meta-feedback is expressed by three values or more, such as five grades, linear regression or other methods may be employed instead of support vector machine and logistic regression mentioned above.

Then, the feedback evaluation prediction learning unit 144 stores parameters representing the created feedback evaluation prediction models in the parameter storing unit 65.

Thereafter, the user recommendation learning process ends.

(Contents Link Sharing Process)

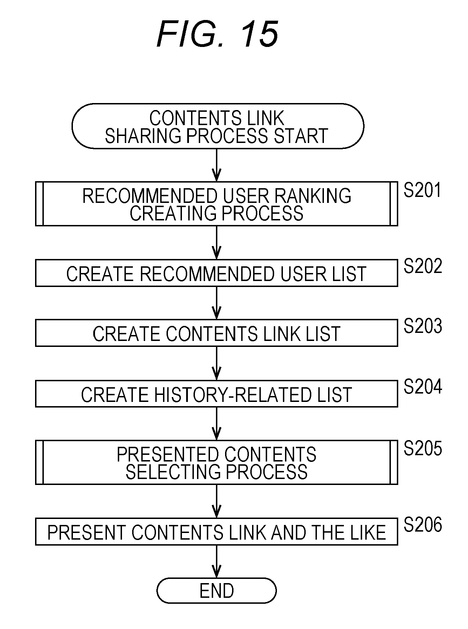

A contents link sharing process performed by the server 11 is hereinafter described with reference to a flowchart shown in Fig. 15.

This process is started when a request for display of a screen containing a contents link is transmitted to the server 11 from any one of the clients 12 via the network 13, for example.

A user requesting display of a screen containing a contents link in this process is hereinafter referred to as an active user.

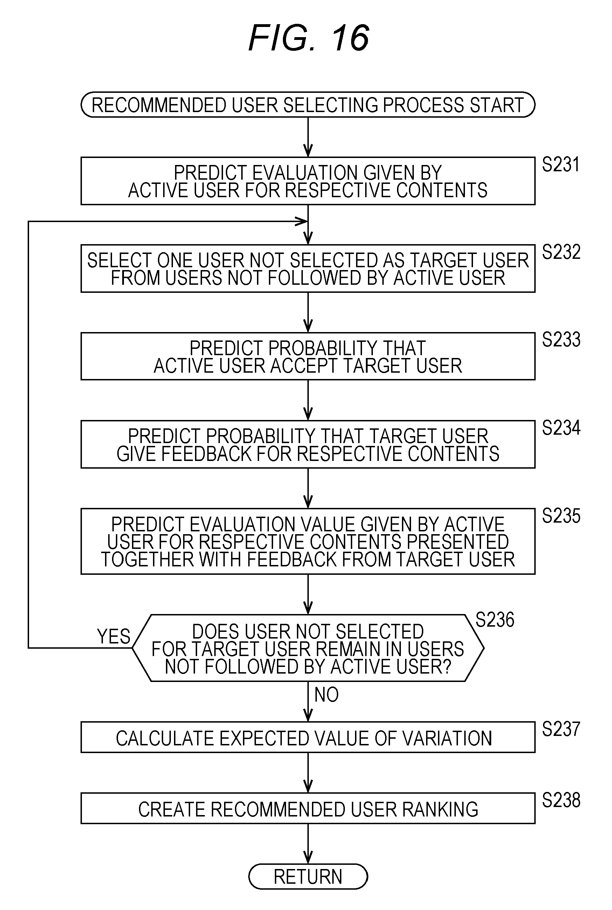

In step S201, the server 11 performs a recommended user ranking creating process. The details of the recommended user ranking creating process are now explained with reference to a flowchart in Fig. 16.

In step S231, the evaluation predicting unit 151 predicts evaluation values of the active user for respective contents. More specifically, the evaluation predicting unit 151 calculates predicted evaluation values $r_{uc}$ given by an active user u for respective contents c by using evaluation prediction models stored in the parameter storing unit 65. The evaluation predicting unit 151 supplies information indicating the result of calculation to the expected value of variation calculating unit 133.

In step S232, the predicting unit 132 selects a user not yet selected for a target user from users not followed by the active user (hereinafter referred to as not-followed users). The target user in this context refers to a user targeted for the processes in step S233 through S235.

In step S233, the user relationship predicting unit 152 predicts a probability that the active user accepts the target user. More specifically, the user relationship predicting unit 152 calculates a user acceptance probability $P(v|u)$ corresponding to a probability that the active user u accepts a target user v by using user relationship prediction models stored in the parameter storing unit 65. The user relationship predicting unit 152 supplies information indicating the result of calculation to the expected value of variation calculating unit 133.

In step S234, the feedback predicting unit 153 predicts a probability that the target user gives feedback for the respective contents. More specifically, the feedback predicting unit 153 calculates a feedback giving probability $P(c, f|v)$ corresponding to the probability that the target user v gives feedback f for the respective contents c by using user relationship prediction models stored in the parameter storing unit 65. The feedback predicting unit 153 supplies information indicating the result of calculation to the expected value of variation calculating unit 133.

In step S235, the feedback evaluation predicting unit 154 predicts evaluation values given by the active user for the respective contents presented together with feedback from the target user. More specifically, the feedback evaluation predicting unit 154 calculates feedback predicted evaluation values $r_{uc}(f, v)$ given by the active user u for the respective contents c presented together with the feedback f from the target user v by using user relationship prediction models stored in the parameter storing unit 65. The feedback evaluation predicting unit 154 supplies information indicating the result of calculation to the expected value of variation calculating unit 133.

In step S236, the predicting unit 132 determines whether any user not selected for a target user remains in the users not followed by the active user. When it is determined that there remains any user not selected for a target user in the users not followed by the active user, the flow returns to step S232.

Thereafter, the processes in step S232 through S236 are repeatedly executed until it is determined that there remains no user not selected for a target user in the users not followed by the active user in step S236. By this method, the foregoing user acceptance probability P(v|u), the feedback giving probability P(c,f|v), and the feedback predicted evaluation value $r_{uc}(f, v)$ are calculated for each of the not followed users v of the active user u.

On the other hand, when it is determined that there remains no user not selected for a target user in the users not followed by the active user in step S236, the flow proceeds to S237.

In step S237, the expected value of variation calculating unit 133 calculates expected values of variation.

In general, an expected value of variation of a user's action varied by a certain incentive given to the user can be calculated by (probability of acceptance of incentive) x (variation of action varied by incentive). The expected value of variation of the user's action is maximized when an incentive corresponding to an argmax $_{incentive}$ (probability of acceptance of incentive) x (variation of action varied by incentive) is given to the user.

Therefore, the expected value of variation calculating unit 133 calculates an expected value of variation E(v|u) of the active user u for the respective not-followed users v by using following Equation (1) and Equation (2).

[Mathematical Formula 1]

$$E(v|u) = P(v|u) \sum_c P(c, f|v) \, \Delta(r_{uc}, r_{uc}(f, v)) \qquad \cdots \ (1)$$

$$\Delta(r_{uc}, r_{uc}(c, u)) = r_{uc}(c, v) - r_{uc} \qquad \cdots \ (2)$$

In Equation (1), P(v|u) is a probability that the active user u accepts an incentive (user v), and $\sum_c P(c, f|v)\Delta(r_{uc}, r_{uc}(f,v))$ is variation of an active user's action varied by the incentive. In addition, the expected value of variation E(v|u) represents a difference between the actions of the active user u when the incentive corresponding to the user v (recommendation of user v) is given and when the incentive is not given. Accordingly, the probability that the action of the active user u varies after recommendation of the user v rises as an absolute value of the expected value of variation E(v|u) increases. On the other hand, the probability that the action of the active user u after recommendation of the user v varies lowers as the absolute value of the expected value of variation E(v|u) decreases.

On the other hand, $\Delta(r_{uc}, r_{uc}(f,v))$ represents variation of the predicted evaluation value given by the active user u for the contents c as a result of presentation of feedback from the user v. In this case, the expected value of variation E(v|u) represents an expected value of variation of the evaluation value given by the active user u for each of the contents when the incentive corresponding to the user v is given. Accordingly, in the case of a positive value of the expected value of variation E(v|u), the larger the absolute value of the expected value of variation E(v|u) becomes, the higher the probability becomes that the evaluation value given by the active user for the contents generally rises after recommendation of the user v. On the other hand, in the case of a negative value of the expected value of variation E(v|u), the larger the absolute value of the expected value of variation E(v|u) becomes, the higher the probability becomes that the evaluation value given by the active user for the contents generally lowers after recommendation of the user v.

Then, the expected value of variation calculating unit 133 supplies information indicating the result of calculation to the recommended user selecting unit 134.

In step S238, the recommended user selecting unit 134 creates recommended user ranking. Initially, the recommended user selecting unit 134 selects recommended users to be recommended to the active user from choices of users corresponding to users not followed by the active user. More specifically, the recommended user selecting unit 134 selects a predetermined number of users having the expected values of variation E(v|u) equivalent to or larger than a predetermined threshold, or in descending order of the expected value of variation E(v|u), from users not followed by the active user to determine the selected users as recommended users.

Then, the recommended user selecting unit 134 creates recommended user ranking where selected recommended users are lined up in descending order of the expected value of variation E(v|u). The recommended user selecting unit 134 supplies information indicating the created recommended user ranking to the recommended user list creating unit 171 of the presented matters setting unit 51.

Thereafter, the recommended user ranking creating process ends.

When the user v corresponding to another user is recommended to the active user u in a typical social service, for example, it is expected that the following flow of actions occurs.
1. The active user u accepts the recommended user v. That is, the active user u follows the user v or establishes friendship with the user v.
2. The user v gives the feedback f for the certain contents c.
3. The active user u reads the feedback f from the user v and accepts the contents c. For example, the active user u listens to the sample of the contents c, reproduces the contents c, or purchases the contents c.

As discussed above, the probability that the active user u accepts the user v and then gives a higher evaluation value for each of the contents becomes higher as the expected value of variation E(v|u) of the recommended user v increases (when the expected value of variation E(v|u) is positive and has a large absolute value). As a result, the probability that the active user u accepts the new contents rises. Accordingly, acceptance of new contents by the active user u is more efficiently realized by recommendation of users in the upper grades of the recommended user ranking to the active user u.
In lieu of foregoing Equation (1), the expected value of variation E(v|u) may be calculated using following Equation (3).
[Mathematical Formula 2]

$$E(v|u) = P(v|u) \sum_{c \in C_v} \Delta(r_{uc}, r_{uc}(f, v)) \qquad \cdots (3)$$

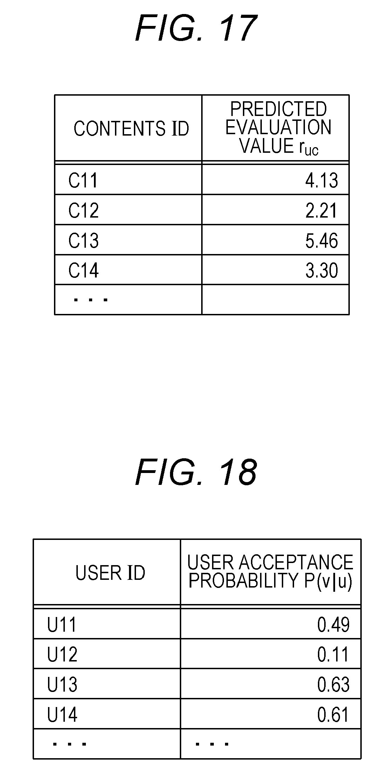

In Equation (3), $C_v$ represents a set of contents for which the user v gives feedback.
According to this modified example, the expected value of variation E(u,v) is calculated not using the feedback giving probability P(c,f|v), but only using a set of contents for which the user v actually gives feedback. Accordingly, the feedback prediction learning in step S103 in Fig. 12, and the calculation of the feedback giving probability P(c,f|v) in step S234 in Fig. 16 can be omitted.
A specific example of selection of recommended users using the expected value of variation E(v|u) obtained by Equation (3) is now described with reference to Figs. 17 through 19.
Fig. 17 shows an example of the result of calculation of a predicted evaluation value $r_{uc}$ given by the active user u. According to this example, the predicted evaluation values $r_{uc}$ given by the active user u for contents C11 through C14 are 4.13, 2.21, 5.46, and 3.30, respectively.
Fig. 18 shows an example of the result of calculation of the user acceptance probability P(v|u) of the user v by the active user u. According to this example, the user acceptance probabilities P(v|u) of users U11 through U14 by the active user u are 0.49, 0.11, 0.63, and 0.61, respectively.

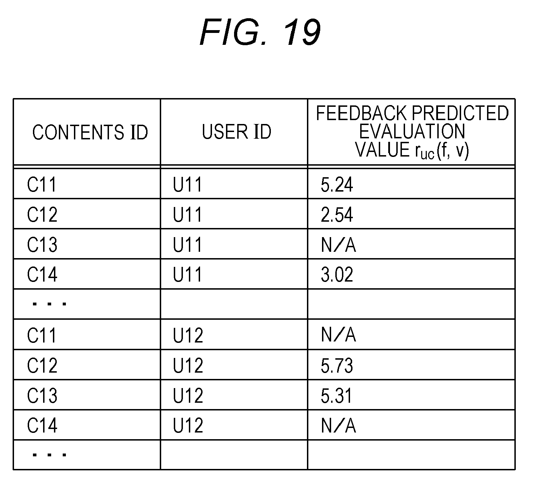

Fig. 19 shows an example of the result of calculation of the feedback predicted evaluation value $r_{uc}(f,v)$ given by the active user u for the contents c for which feedback is given from the user v. According to this example, the feedback predicted evaluation values $r_{uc}(f,v)$ given by the active user u for the contents C11, C12, and C14 for which feedback is given from the user U11 are 5.24, 2.54, and 3.02, respectively. Moreover, the feedback predicted evaluation values $r_{uc}(f, v)$ given by the active user u for the contents C12 and C13 for which feedback is given from the user U12 are 5.73 and 5.31, respectively.
Concerning the feedback predicted evaluation value $r_{uc}(c,v)$ having a value of N/A, no feedback is given for targeted contents from the user v. Thus, this feedback predicted evaluation value is not included in the calculation of the expected value of variation E(v|u).
For example, the expected value of variation E(U11|u) given by the active user u for the user U11 is calculated as 0.568 (= 0.49 x (5.24 - 4.13 + 2.54 - 2.21 + 3.02 - 3.30)) using Equation (3). On the other hand, the expected value of variation E(U12|u) given by the active user u for the user U12 is calculated as 0.371 (= 0.11 $\times$ (5.73 - 2.21 + 5.31 - 5.46) using Equation (3).
Accordingly, in comparison between the user U11 and the user U12, it is considered that the user U11 is more suited for a user to be recommended to the active user u. Thus, when either one of the users U11 and U12 is to be determined as a recommended user, the user U11 is selected for a recommended user.
Returning to Fig. 15, in step S202, the recommended user list creating unit 171 creates a recommended user list based on the recommended user ranking. More specifically, the recommended user list creating unit 171 selects recommended users to be actually recommended to the active user from users contained in the recommended user ranking on the basis of predetermined criteria.

The criteria for selection of recommended users may be arbitrarily established. For example, recommended users may be users from the top to a predetermined rank in the recommended user ranking, or may be only followees of the active user included in the recommended user ranking.

Then, the recommended user list creating unit 171 creates a recommended user list where the selected recommended users are lined up in accordance with a predetermined rule. For example, the recommended user list creating unit 171 creates the recommended user list by listing the recommended users in descending order of the expected value of variation E(v|u). The recommended user list creating unit 171 supplies the created recommended user list to the contents link list creating unit 172, the history-related list creating unit 173, the presented contents selecting unit 174, and the display control unit 52.

Users to be presented to the active user, such as followees of the active user and users included in the recommended list are hereinafter referred to as presented users.

In step S203, the contents link list creating unit 172 creates a contents link list. More specifically, the contents link list creating unit 172 creates a contents link by reading contents links created by the presented users from the contents link storing unit 64, and arranging the read contents links in accordance with a predetermined rule.

The rule for arranging the contents links may be arbitrarily established. For example, the contents links may be arranged in time series in the order of the creation date from newest to oldest, or from oldest to newest. Alternatively, contents links created by presented users having similar feature values may be arranged adjacent to each other. Conversely, contents links created by presented users having dissimilar feature values may be arranged adjacent to each other.

The contents link list creating unit 172 supplies the created contents link list to the presented contents selecting unit 174 and the display control unit 52.

In step S204, the history-related list creating unit 173 creates a history-related list. For example, the history-related list creating unit 173 extracts contents used by the active user in a predetermined period up to the present time based on the user history of the active user stored in the user history storing unit 63.

At this time, the range of extraction of contents may be arbitrarily established in accordance with the level of the targeted use. For example, the range of extraction may be a set of contents previously reproduced by the active user, or may be expanded to a set including contents browsed by the active user for obtaining information on the contents.

Moreover, the history-related list creating unit 173 extracts contents corresponding to link source contents or link destination contents of the contents links created by the presented users, and the corresponding contents links from the extracted contents, based on the contents link information stored in the contents link storing unit 64.

Then, the history-related list creating unit 173 creates a history-related list based on the extracted contents and contents links. The history-related list creating unit 173 supplies the created history-related list to the presented contents selecting unit 174 and the display control unit 52.

The history-related list will be detailed later.

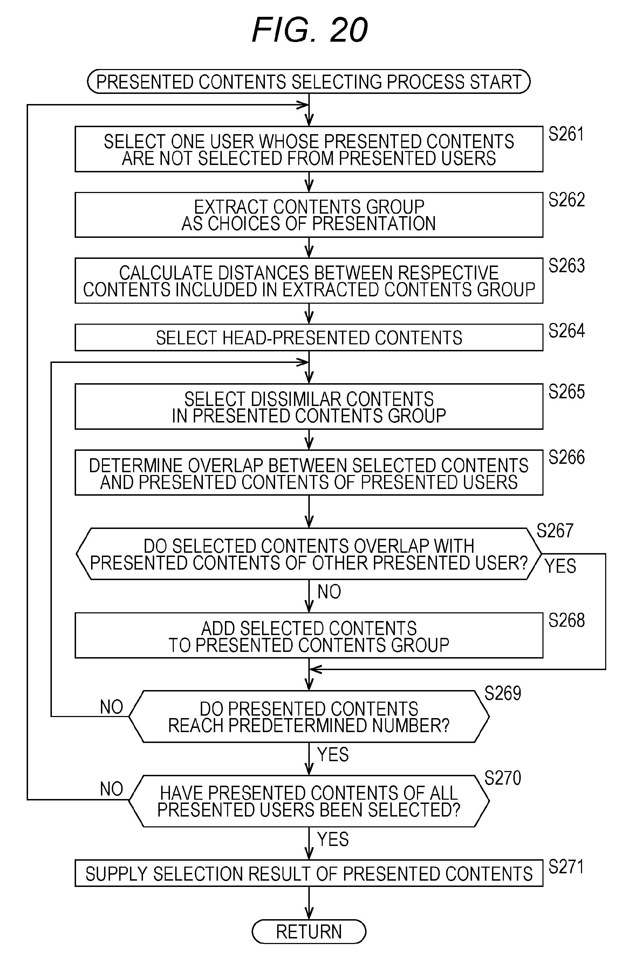

In step S205, the represented contents selecting unit 174 performs a presented contents selecting process. The details of the presented contents selecting process are hereinafter discussed with reference to a flowchart shown in Fig. 20.

In step S261, the presented contents selecting unit 174 selects one user whose presented contents are not yet selected from the presented users.

In this process, the user selected in step S261 is hereinafter referred to as a target user.

In step S262, the presented contents selecting unit 174 selects a group of contents which become presented choices. For example, the presented contents selecting unit 174 extracts a group of contents (hereinafter referred to as presented contents choice group) included in the upper ranks in the contents use history of the target user and also included in the contents use history of the active user based on the user histories stored in the user history storing unit 63.

The contents included in the upper ranks in the contents use history of the target user in this context refer to contents to which the target user gives high significance, and are determined based on the number of times of use by the target user, or the evaluation values given by the target user, for example.

In addition, the contents included in the contents use history of the active user in this context refer to contents previously used by the active user.

The levels of use of contents included in the use histories of the target user and of the active user used in this step may be arbitrarily established. For example, the use history may include only contents previously reproduced, or may further include contents previously browsed for obtaining information on the contents.

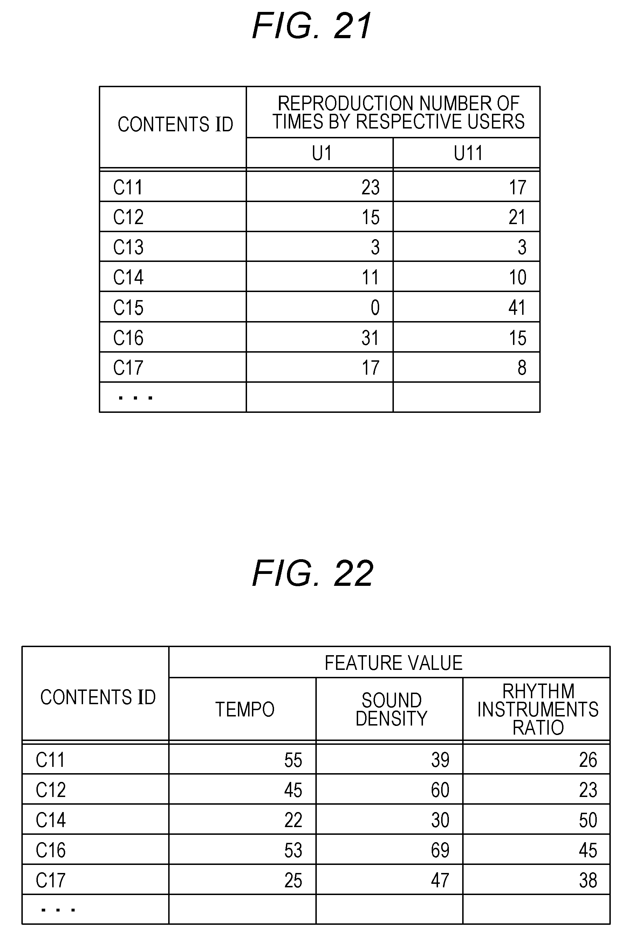

An example of extraction of a presented contents choice group based on the number of times of reproduction of contents is hereinafter described with reference to Fig. 21. Fig. 21 shows a history of the number of times of reproduction of respective contents by the active user U1 and the target user U11.

For example, requirements for extraction of the presented contents choice group are established such that the number of times of reproduction by the target user U11 is 10 times or larger, and that the contents are previously reproduced by the active user. In this case, contents C11, C12, C14, C16, and C17 are extracted.

The contents included in the presented contents choice group are hereinafter referred to as presented contents choices as well.

In step S263, the presented contents selecting unit 174 calculates distances between the respective contents included in the extracted contents group (i.e., presented contents choices).

Assuming that a distance between a contents $c_i$ and a contents $c_j$ is $d(c_i, c_j)$, an arbitrary method may be employed for calculation of the distance $d(c_i, c_j)$. For example, Euclidean distance in the feature value space of contents, or cosine similarity based on the evaluation histories of the users may be used for calculating the distance $d(c_i, c_j)$.

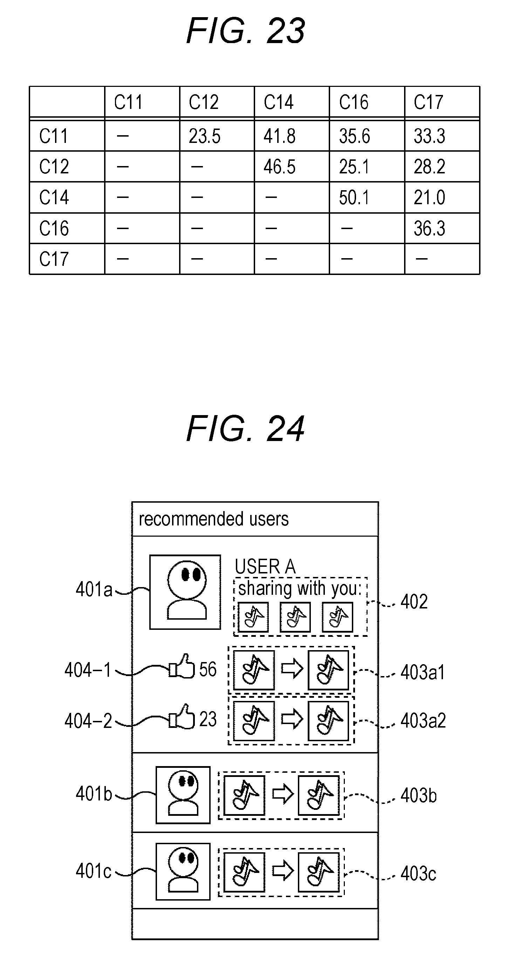

A specific example of the calculation method of the distances between the respective contents is hereinafter discussed with reference to Figs. 22 and 23. Fig. 22 shows an example of feature values of the contents C11, C12, C14, C16, and C17 extracted in the example of Fig. 21 mentioned above. According to this example, three types of feature values of tempo, sound density, and rhythm instruments ratio are used. For example, the value of tempo of the contents C11 is 55, the value of sound density of the contents C11 is 39, and the rhythm instruments ratio of the contents C11 is 26.

Fig. 23 shows the result of calculation of Euclidean distances between the respective contents based on the feature values shown in Fig. 22. For example, distances between the contents C11 and the respective contents of the contents C12, C14, C16, and C17 are 23.5, 41.8, 35.6, and 33.3.

In step S264, the presented contents selecting unit 174 selects contents to be presented at the head. More specifically, the presented contents selecting unit 174 selects one piece of contents (hereinafter referred to as head presented contents) to be presented at the head together with the target user from the presented contents choice group by a predetermined method. The presented contents selecting unit 174 adds the selected head presented contents to a presented contents group of the target user.

The presented contents group in this context refers to a set of contents selected for contents to be presented to the active user together with information of the target user from the presented contents choice group.

The method for selecting the head presented contents may be an arbitrarily determined as example, contents included in the highest rank in the use history of the target user may be selected from the presented contents choice group. Alternatively, the head presented contents may be randomly selected.

For example, when the head presented contents of the target user U11 are selected based on the number of times of reproduction in the case of the example in Fig. 21, the contents C12 reproduced the highest number of times in the presented contents choice group are selected for the head presented contents.

It is preferable that the head presented contents are selected from the contents not yet selected for the presented contents of the other presented users.

In step S265, the presented contents selecting unit 174 selects contents dissimilar to the presented contents group. More specifically, the presented contents selecting unit 174 selects one piece of contents whose distances from the presented contents group become the maximum from the presented contents choices not yet selected for presented contents.

For example, assuming that contents not yet selected for presented contents are $ca_i$ ($i$ = 1, 2, ..., M), and that contents already selected for presented contents are $cb_j$ ($j$ = 1, 2, ..., N), the presented contents selecting unit 174 selects a piece of contents $ca_i$ meeting $\mathrm{argmax}_i \sum_j d(ca_i, cb_j)$. As a result, contents dissimilar to the presented contents already selected are selected.

For example, according to this example, the contents C14 whose distance from the contents C12 already selected for presented contents becomes the maximum are selected. When the contents C12 and contents C14 are selected for presented contents, the contents C16 whose average value of the distances from the contents C12 and from the contents C14 becomes the maximum are selected for presented contents.

At this time, the presented contents already selected and presented by the other presented users may be included in the presented contents group used for calculation of distances. In this case, contents dissimilar to the presented contents of the other presented users as well as the presented contents of the target user can be selected.

In step S266, the presented contents selecting unit 174 determines overlap between the selected contents and the (already selected) presented contents of the other presented users.

In step S267, the presented contents selecting unit 174 determines whether the selected contents overlap with the presented contents of the other presented users based on the result of determination in step S266. When it is determined that the selected contents do not overlap with the presented contents of the other presented users, the flow proceeds to step S268.

In step S268, the presented contents selecting unit 174 adds the selected contents to the presented contents group of the target user.

Then, the flow proceeds to step S269.

On the other hand, when it is determined that the selected contents overlap with the presented contents of the other presented users in step S267, the process in step S268 is skipped. Thereafter, the flow proceeds to step S269.

In other words, the selected contents are not added to the presented contents group of the target user. In addition, the selected contents are excluded from the presented contents choice group of the target user.

In step S269, the presented contents selecting unit 174 determines whether the number of the presented contents reach a predetermined number. When it is determined that the number of the presented contents of the target user does not reach the predetermined number, the flow returns to step S265.

Thereafter, the processes in steps S265 through S269 are repeatedly executed until it is determined that the number of the presented contents reach the predetermined number in step S269. By this method, a predetermined number of contents not coinciding with the presented contents of the other presented users are selected from the contents included in the upper ranks in the use history of the target user and included in the use history of the active user, and determined as presented contents of the target user. Moreover, the presented contents thus selected have the least possible similarities to each other. Accordingly, a wide variety of contents types are presented by each presented user.

On the other hand, when it is determined that the number of the presented contents reach the predetermined number in step S269, the flow proceeds to step S270.

In step S270, the presented contents selecting unit 174 determines whether the presented contents of all the presented users are selected. When it is determined selection of the presented contents of all the presented users is not completed, the flow returns to step S261.

Thereafter, the processes in steps S261 through S270 are repeatedly executed until it is determined that the presented contents of all the presented users are selected in step S270. By this method, the predetermined number of the presented contents are selected for each of the entire presented users.

On the other hand, when it is determined that the presented contents of all the presented users are selected in step S270, the flow proceeds to step S271.

In step S271, the presented contents selecting unit 174 supplies information indicating the result of selection of the presented contents of the respective users to the display control unit 52.

Thereafter, the presented contents selecting process ends.

Returning to Fig. 15, the server 11 presents contents links and others in step S206. More specifically, the display control unit 52 creates display control data for displaying a screen containing at least one of the recommended user list, the contents link list, and the history-related list. The combination of the recommended user list, the contents link list, and the history-related list varies depending on requests from the clients 12, for example. The display control unit 52 transmits the created display control data to the client 12 of the active user via the communicating unit 31.

The output control unit 203 of the client 12 of the active user receives the display control data from the server 11 via the network 13 and the communicating unit 201. The output control unit 203 allows the output unit 204 to display a screen containing at least one of the recommended user list, the contents link list, and the history-related list based on the display control data.

A specific example of the recommended user list, the contents link list, and the history-related list displayed on the client 12 is hereinafter discussed with reference to Figs. 24 through 27.

Fig. 24 illustrates a display example of the recommended user list. Dotted lines in the figure are additional lines added for explanation, and not displayed in practical cases.

According to this example, users A through C are vertically lined up and presented as recommended users.

User images 401a through 401c are images representing the users A through C, respectively, and expressed by pictures or avatars of the respective users. In addition, the name, nickname or the like of the user A is displayed on the right of the user image 401a.

A presented contents display area 402 is provided on the right of the user image 401a and below the name or the like of the user A. Images representing the presented contents of the user A are horizontally lined up in the presented contents display area 402. These images representing the contents are expressed by jackets of albums or singles containing the respective contents, or by pictures of artists, for example. This applies to images representing other contents in Figs. 24 through 27.

A contents link display area 403a1 is provided below the presented contents display area 402. A contents link created by the user A is displayed within the contents link display area 403a1. More specifically, an image representing the link source contents is displayed on the left side of an arrow directed to the right, while an image representing the link destination contents is displayed on the right of the arrow.

A feedback button 404-1 is displayed on the left of the contents link display area 403a1. The feedback button 404-1 is a button pressed to give favorable feedback when the active user likes the contents link within the contents link display area 403a1. Displayed on the right of the feedback button 404-1 is the number of users giving feedback up to the present time (hereinafter referred to as feedback user number) for the contents link within the contents link display area 403a1.

A contents link display area 403a2 is provided below the contents link display area 403a1. The contents link display area 403a2 displays a contents link created by the user A and different from the contents link within the contents link display area 403a1.

Moreover, a feedback button 404-2 similar to the feedback button 404-1 is displayed on the left of the contents link display area 403a2. Furthermore, the feedback user number for the contents link within the contents link display area 403a2 is displayed on the left of the feedback button 404-2.

A contents link display area 403b is provided on the right of the user image 401b. A contents link created by the user B is displayed in the contents link display area 403b.

A contents link display area 403c is provided on the right of the user image 401c. A contents link created by the user C is displayed in the contents link display area 403c.

The order of display of the recommended users may be arbitrarily determined. For example, the recommended users may be lined up in descending order of the expected value of variation E(v|u). Alternatively, users having similar feature values may be arranged adjacent to each other. Conversely, users having dissimilar feature values may be arranged adjacent to each other.

Fig. 25 shows an example of display of the contents link list. Dotted lines in the figure are additional lines added for explanation, and not displayed in practical cases.

According to this example, contents links created by the users A through C corresponding to followees of the active user, information about the users A through C, and others are displayed in three rows in the vertical direction.

A contents link display area 421a is provided in the left part of the first row. The displayed matters in the contents link display area 421a are substantially similar to those of the contents link display areas 403a1 through 403c in Fig. 24, but are different in that artist names of the respective contents are displayed below images representing the respective contents.

The balloon 422a is displayed on the right of the contents link display area 421a. Displayed within the balloon 422a is information showing the link feature value used for creation of the contents link within the contents link display area 421a, i.e., information showing the relationship between the two contents constituting the contents link. This information may be formed by labels or the like of the link feature values provided by the server 11, or may be information created by the user who has created the contents link. In addition, a feedback button 423a for the contents link within the contents link display area 421a is displayed within the balloon 422a.

A user image 424a representing the user who has created the contents link within the contents link display area 421a is displayed on the right of the balloon 422a. The name, nickname or the like of the user A is displayed on the right of the user image 424a.

A presented contents display area 425a similar to the presented contents display area 402 in Fig. 24 is provided on the right of the user image 424a and below the name or the like of the user A. Images representing the presented contents of the user A are displayed in the presented contents display area 425a.

A contents link created by the user B and information about the user B are displayed on the second row in a manner similar to the display on the first row. A contents link created by the user C and information about the user C are displayed on the third row in a manner similar to the display on the first and second rows.

The order of display of the contents links may be arbitrarily determined. For example, the contents links may be arranged in time series of the creation date from newest to oldest or from oldest to newest. Alternatively, contents links created by users having similar feature values may be arranged adjacent to each other. Conversely, contents links created by users having dissimilar feature values may be arranged adjacent to each other.

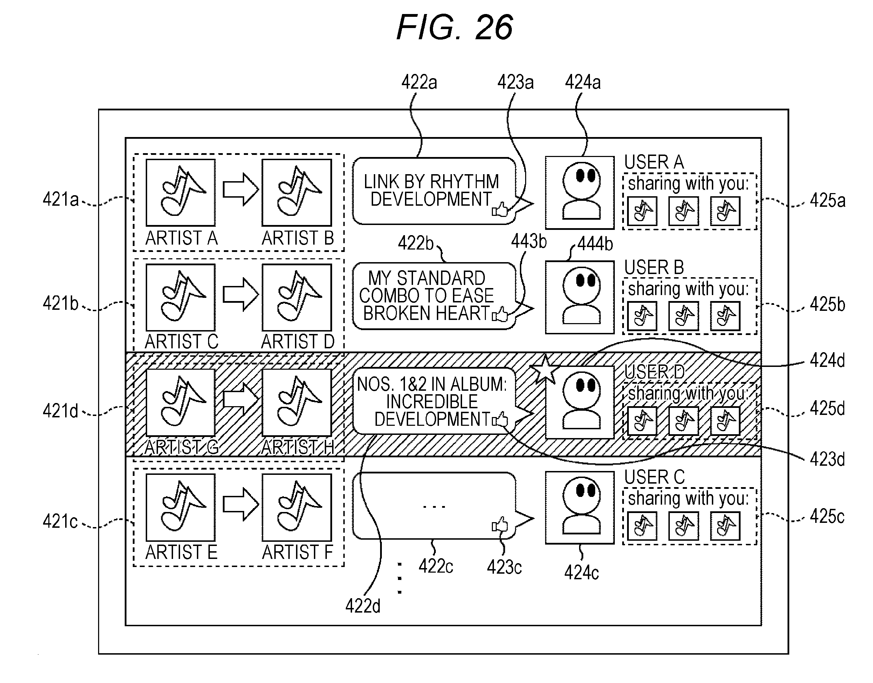

In addition, as illustrated in Fig. 26, the contents links of the recommended users may be mixed and displayed together with the contents links of the followees of the active user.

More specifically, the contents link list shown in Fig. 26 includes a shaded row inserted between the contents links of the second row and the third row of Fig. 25. This inserted row contains a contents link of a user D corresponding to a recommended user, and information about the user D displayed in the inserted row in the same manner as the display of the other rows. Moreover, a star mark representing that the user D is a recommended user is displayed on the upper left of an image 424d representing the user D.

The contents links of the recommended users may be made distinguishable from the contents links of the followees as illustrated in this figure, or may be made undistinguishable from the contents links of the followees. Besides, the contents links of the recommended users may be displayed adjacent to the contents links of the followees having feature values exhibiting highest similarity to the feature values of the contents links of the recommended users.

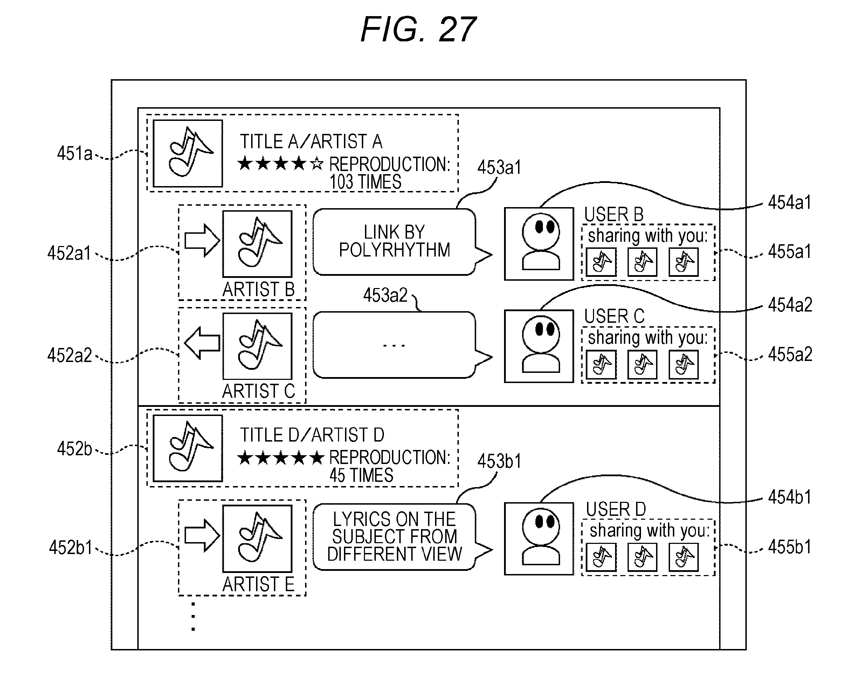

Fig. 27 shows a display example of the history-related list. The history-related list displays contents links and the like containing the contents included in the use history of the active user (hereinafter referred to as history contents) together with the previous use history of the active user.

More specifically, according to this example, information about history contents and others are displayed in two rows. The order of display of the history contents may be arbitrarily determined. For example, the history contents may be arranged in the order of the use date from newest to oldest, or may be arranged in descending order of number of times of use (number of times of reproduction in this example).

A history contents display area 451a is provided in the upper left part of the first row. The history contents display area 451a displays information about one piece of the history contents. More specifically, the history contents display area 451a displays an image representing the history contents, the title of the history contents, the name of the artist, the evaluation value, and the number of times of reproduction. The evaluation value displayed may be the evaluation value given by the active user, or may be the average value of the evaluation values given by the respective users. In addition, the number of times of reproduction displayed may the number of times of reproduction by the active user, or the total number of times of reproduction by all the users.

Link contents display areas 452a1 and 452a2 are lined up in the vertical direction and displayed below the history contents display area 451a. Displayed in the link contents display areas 452a1 and 452a2 are the history contents displayed in the history contents display area 451a, and information about contents constituting the contents link.

More specifically, an image representing contents corresponding to the link destination of the history contents displayed in the history contents display area 451a, and the name of the artist are displayed in the link contents display area 452a1 where an arrow directed to the right is displayed. This display presents to the active user a contents link determining the history contents within the history contents display area 451a as the link source, and the contents within the link contents display area 452a1 as the link destination.

A balloon 453a1 is displayed on the right of the link contents display area 452a1. Displayed within the balloon 453a1 is information indicating the link feature value used for creation of the contents link constituted by the history contents within the history contents display area 451a and the contents within the link contents display area 452a1.

Displayed on the right of the balloon 453a1 is a user image 454a1 representing a user B who has created the contents link constituted by the history contents within the history contents display area 451a and the contents within the link contents display area 452a1. In addition, displayed on the right of the user image 454a1 is the name, nickname or the like of the user B.

A presented contents display area 455a1 similar to the presented contents display area 402 in Fig. 24 is provided on the right of the user image 454a1 and below the name or the like of the user B. Images representing the represented contents of the user B are displayed in the presented contents display area 455a1.

On the other hand, an image representing the contents corresponding to the link source of the history contents displayed in the history contents display area 451a, and the name of the artist are displayed in a link contents display area 452a2 where an arrow directed to the left is displayed. This display presents to the active user a contents link which determines the contents within the link contents display area 452a2 as the link source, and the history contents within the history contents display area 451a as the link destination.

A balloon 453a2 is displayed on the right of the link contents display area 452a2. Displayed within the balloon 453a2 is information indicating the link feature value used for creation of the contents link constituted by the history contents within the history contents display area 452a2 and the contents within the link contents display area 452a2.

Displayed on the right of the balloon 453a2 is a user image 454a2 representing a user C who has created the contents link constituted by the history contents within the history contents display area 451a and the contents within the link contents display area 452a2. In addition, displayed on the right of the user image 454a2 is the name, nickname or the like of the user C.

A presented contents display area 455a2 similar to the presented contents display area 402 in Fig. 24 is provided on the right of the user image 454a2 and below the name or the like of the user C. Images representing the represented contents of the user C are displayed in the represented contents display area 455a2.

In a manner similar to the first row, displayed in the second row are information about different history contents of the active user, contents links including the history contents, information about the users who have created the contents links and others.

The contents links presented together with the history contents may be limited to contents links created by the followees of the active user or may include contents links created by recommended users.

Then, one or more of the screens shown in Figs. 24 through 27 are combined and displayed on the client 12 of the active user.

Thereafter, the contents link sharing process ends.

In the manner discussed herein, the active user can use the contents links created by the other users. As a result, the active user can find associated contents based on the viewpoints of the other users. Particularly, in the history-related list, the active user can find contents associated with the contents used by the active user. Moreover, the active user can expand his/her view concerning the contents, or can easily find contents suited for his/her taste through the contents links created by the other users.

Furthermore, users who can change the action of the active user with high probability are recommended. Therefore, the active user accepts these users and accepts new contents with high probability. When users simply similar to the active user (such as users having similar contents use histories) are recommended, the active user does not discover a lot from these users. On the other hand, when users who can change the action of the active user with high probability are recommended, the active user discovers novel matters (that is, the active user experiences contents in new categories) with high probability.

In addition, contents dissimilar to the other contents are presented in the contents use histories (i.e., presented contents) presented together with the recommended users. In this case, accurate tastes of the presented users can be offered without vias of the tastes. Accordingly, the active user can easily grasp tastes of the respective presented users, and easily recognize similarities and dissimilarities between the active user and the presented users. As a result, the active user more easily feels a sense of similarity with other users, and therefore more easily finds users suited for the taste of the active user. Furthermore, the active user obtains opportunities for experiencing a wider variety of contents.

In addition, overlaps between the contents presented by the respective presented users are reduced, wherefore similarities and dissimilarities of the tastes of the respective presented users are more clearly conceived. Furthermore, the active user obtains opportunities for experiencing a wider variety of contents.

<2. Modified Examples>

Modified examples of the embodiment according to the present technology discussed above are hereinafter described.

[Modified Example 1: Modified Examples as to Contents Link]

Discussed in the above description is the example of sharing created contents links between users. However, the present technology is applicable to creation of a contents link by a user within the local environment of the user for personal use of the contents link, for example.

Moreover, the present technology is applicable to creation of a contents link connecting a part of contents (such as introduction or chorus of musical composition) and a part of other contents, or a contents link connecting the whole contents and a part of other contents. In creating a link connecting a part of contents, such a contents link may be created which connects different parts within the same contents.

Furthermore, discussed in the above description is the example of presenting information about a user who has created a contents link together with the contents link. However, the information about the user having created the contents link may be omitted.

Furthermore, the present technology is applicable to creation of a contents link connecting one piece of contents to multiple pieces of contents, or connecting multiple pieces of contents to one piece of contents, and further applicable to creation of a contents link connecting multiple pieces of contents to multiple pieces of contents.

Furthermore, the present technology is applicable to creation of a contents link connecting three or more contents.

Furthermore, the present technology is applicable to creation of links of various types of contents including books, games, software, websites, news, advertisements and the like in the form of characters, voice, images and the like, as well as music and movies discussed above.

Furthermore, the present technology is applicable to creation of links of various types of items other than contents, including various types of commodities, and users and celebrities on social services.

[Modified Example 2: Modified Examples as to Presentation of User and Contents]

Discussed in the above description is the example of presenting a plurality of users. However, the present technology is applicable to presentation of one presented user. More specifically, advantages similar to the foregoing advantages can be offered when a plurality of pieces of contents dissimilar to each other are presented together with one presented user.

Moreover, discussed in the above description is the example of presenting a plurality of pieces of presented contents by each of presented users. However, the present technology is applicable to presentation of one piece of contents by each of presented users. More specifically, in presenting a plurality of presented users, for example, advantages similar to the foregoing advantages can be offered when one piece of presented contents is presented by each of multiple presented users such that the presented contents do not overlap with one another.

Furthermore, discussed in the above description is the example of prohibiting overlap of presented contents between respective presented users. However, overlap of presented contents may be allowed within a predetermined range. In other words, the number of presented contents overlapping between presented users may be limited to a predetermined range of numbers.

For example, the total number of presented contents overlapping with one another may be limited to a predetermined range of numbers. For example, when ten pieces of presented contents are presented in total by all presented users, overlap of up to two pieces of contents in total is allowed.

Alternatively, for example, the number of contents presented by each presented user and overlapping with contents of other presented users may be limited to a predetermined range of numbers. For example, when three pieces of presented contents are presented by each presented user, only one piece of contents presented by each presented user and overlapping with other presented contents is allowed.

Alternatively, for example, the number of presented users presented for one piece of presented contents may be limited. For example, up to two presented users are allowed to be presented for one piece of presented contents.

Discussed in the above description is the example of presenting a contents link created by a presented user and presented contents together with the presented user. However, the presented matters may be only either one of the contents link and the presented contents. More specifically, only the contents link may be presented together with the presented user, or only the presented contents may be presented together with the presented user.

Furthermore, the present technology is applicable to presentation of links of various types of contents, including books, games, software, websites, news, advertisements and the like in the form of characters, voice, images and the like, as well as music and movies discussed above, together with presented users.

Furthermore, the present technology is applicable to presentation of links of various types of items other than contents, including various types of commodities, and users and the like on social services, together with presented users.

[Modified Example 3: Other Modified Examples]

Definitions of use of items according to the present technology vary in accordance with targeted types of items and the like. For example, when the item is music, the use of the item corresponds to reproduction or the like. When the item is a movie, the use of the item corresponds to sample listening or the like. Moreover, when the item is a commodity, the use of the item corresponds to purchase, browsing of information or the like. Furthermore, when the item is another user, the use of the item corresponds to communication or the like with the user.

Discussed in the above description is the example of using an expected value of variation of an evaluation value given by a user for contents as an expected value of variation. However, an expected value of variation of other parameters representing an action of a user may be employed.

[Structure Example of Computer]

A series of the foregoing processes may be implemented by hardware, or may be implemented by software. When the series of the processes are implemented by software, a program constituting the software is installed in a computer. Examples of the computer in this context include a computer incorporated in dedicated hardware, and a computer capable of performing various types of functions under various types of programs installed in the computer, such as a general-purpose computer, for example.

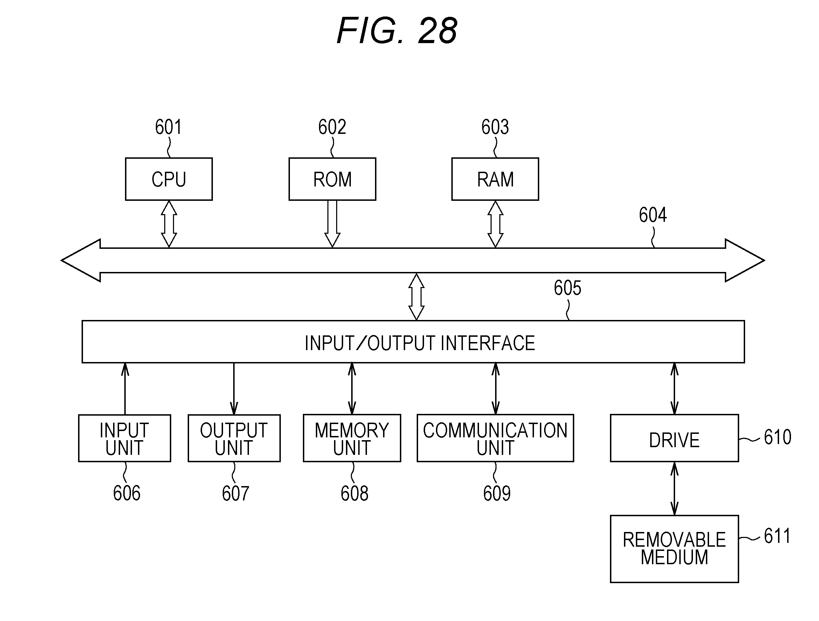

Fig. 28 is a block diagram showing a structure example of hardware of a computer implementing a series of the foregoing processes under a program.

According to the computer, a CPU (Central Processing Unit) 601, a ROM (Read Only Memory) 602, and a RAM (Random Access Memory) 603 are connected with one another via a bus 604.

An input/output interface 605 is further connected with the bus 604. An input unit 606, an output unit 607, a memory unit 608, a communication unit 609, and a drive 610 are connected with the input/output interface 605.

The input unit 606 is constituted by a keyboard, a mouse, a microphone and others. The output unit 607 is constituted by a display, a speaker and others. The memory unit 608 is constituted by a hard disk, a non-volatile memory and others. The communication unit 609 is constituted by a network interface and others. The drive 610 drives a removable medium 611 such as a magnetic disk, an optical disk, a magneto-optical disk, and a semiconductor memory.

According to the computer thus constructed, the CPU 601 loads a program stored in the memory unit 608 into the RAM 603 via the input/output interface 605 and the bus 604, and implements the program to perform the series of the foregoing processes, for example.

The program implemented by the computer (CPU 601) may be recorded on the removable medium 611 and provided in the form of a package medium, for example. In addition, the program may be provided via a wired or wireless transmission medium such as a local area network, the Internet, and digital satellite broadcasting.

According to the computer, the program may be installed into the memory unit 608 via the input/output interface 605 by attaching the removable medium 611 to the drive 610. Alternatively, the program may be received by the communication unit 359 via a wired or wireless transmission medium, and installed into the memory unit 608. Instead, the program may be installed in the ROM 602 or the memory unit 608 beforehand.

The program implemented by the computer may be a program under which the processes are performed in time series in the order discussed in this specification, or may be a program under which the processes are performed in parallel or at necessary timing such as calls.

Moreover, in the present specification, the system refers to a collection of a plurality of constituent elements (such as devices and modules (parts)), and is not limited to a structure which contains all the constituent elements within the same housing. Therefore, a plurality of devices housed in individual housings and connected via a network, and a device which contains a plurality of modules within one housing are both defined as a system.

Furthermore, embodiments of the present technology are not limited to the embodiment described herein. Various changes may be made without departing from the scope of the present technology.

For example, the present technology may have a form of cloud computing which shares and jointly processes one function between a plurality of devices via a network.

Moreover, the respective steps described in conjunction with the foregoing flowcharts may be executed by one device, or may be executed jointly by a plurality of devices.

Furthermore, when a plurality of processes are contained in one step, the plurality of processes contained in the one step may be executed by one device, or may be executed jointly by a plurality of devices.

In addition, the present technology may have the following configurations.

(1)
An information processing apparatus, including:

an item selecting unit selecting a plurality of items dissimilar to each other from a group of items used by a presented user as a target presented to a user; and
a presentation control unit allowing the plurality of selected items to be presented to the user together with information about the presented user.

(2)
The information processing apparatus according to (1), wherein the item selecting unit limits the number of items overlapping each other between the presented users when the plurality of presented users are presented to the user.

(3)
The information processing apparatus according (1) or (2), wherein the item selecting unit calculates distances between a selected group of the items and the remaining items based on feature values of the items, and selects an item having the maximum distance when a new item is selected from the group of items used by the presented user.

(4)
The information processing apparatus according to any one of (1) through (3), wherein the item selecting unit selects a plurality of items from items previously used by the user and included in the group of items used by the presented user.

(5)
The information processing apparatus according to any one of (1) through (4), further including:

a recommended user selecting unit calculating an expected value of variation of an action of the user, which variation is produced by presentation of a plurality of choices of users to be recommended to the user, and selecting a recommended user to be recommended to the user from the choices of the users based on the calculated expected value,
wherein

the item selecting unit selects a plurality of items dissimilar to each other from a group of items used by the recommended user, and
the presentation control unit allows the plurality of selected items to be presented to the user together with information about the recommended user.

(6)
The information processing apparatus according to (5), wherein the recommended user selecting unit calculates the expected value based on a probability that the user accepts the choices of users, and variation of a prediction value of an evaluation given by the user for a predetermined group of items, which variation is produced by presentation of feedback given by the choices of users.

(7)
The information processing apparatus according to (6), wherein the recommended user selecting unit calculates the expected value further based on a probability that the choices of users give feedback for respective items included in the predetermined group of items.

(8)
An information processing method performed by an information processing apparatus, including the steps of:

selecting a plurality of items dissimilar to each other from a group of items used by a presented user as a target presented to a user; and
allowing the plurality of selected items to be presented to the user together with information about the presented user.

(9)
A program implemented by a computer, including the steps of:

selecting a plurality of items dissimilar to each other from a group of items used by a presented user as a target presented to a user; and
allowing the plurality of selected items to be presented to the user together with information about the presented user.

REFERENCE SIGNS LIST

| 1 | Information processing system |
|---|---|
| 11 | Server |
| 12-1 through 12-n | Client |
| 32 | Information processing unit |
| 33 | Storing unit |
| 41 | Contents link creation processing unit |
| 42 | Recommended user selection processing unit |
| 43 | Presentation control unit |
| 51 | Presented matters setting unit |
| 52 | Display control unit |
| 61 | Contents information storing unit |
| 62 | User relationship storing unit |
| 64 | Contents link storing unit |
| 65 | Parameter storing unit |
| 101 | Link source contents selecting unit |
| 102 | Feature value significance calculating unit |
| 103 | Link feature value selecting unit |
| 104 | Link destination contents selecting unit |
| 105 | Contents link creating unit |
| 131 | Learning unit |
| 132 | Predicting unit |
| 133 | Expected value of variation calculating unit |
| 134 | Recommended user selecting unit |
| 141 | Evaluation prediction learning unit |
| 142 | User relationship prediction learning unit |
| 143 | Feedback prediction learning unit |
| 144 | Feedback evaluation prediction learning unit |
| 151 | Evaluation predicting unit |
| 152 | User relationship predicting unit |
| 153 | Feedback predicting unit |
| 154 | Feedback evaluation predicting unit |
| 171 | Recommended user list creating unit |
| 172 | Contents link list creating unit |
| 173 | History-related list creating unit |
| 174 | Presented contents selecting unit |
| 203 | Output control unit |
| 204 | Output unit |
| 205 | Input unit |
| 206 | Contents link creating unit |

**Claims**

1. An information processing apparatus, comprising:

an item selecting unit selecting a plurality of items dissimilar to each other from a group of items used by a presented user as a target presented to a user; and

a presentation control unit allowing the plurality of selected items to be presented to the user together with information about the presented user.

2. The information processing apparatus according to claim 1, wherein the item selecting unit limits the number of items overlapping each other between the presented users when the plurality of presented users are presented to the user.

3. The information processing apparatus according to claim 1, wherein the item selecting unit calculates distances between a selected group of the items and the remaining items based on feature values of the items, and selects an item having the maximum distance when a new item is selected from the group of items used by the presented user.

4. The information processing apparatus according to claim 1, wherein the item selecting unit selects a plurality of items from items previously used by the user and included in the group of items used by the presented user.

5. The information processing apparatus according to claim 1, further comprising:

a recommended user selecting unit calculating an expected value of variation of an action of the user, which variation is produced by presentation of a plurality of choices of users to be recommended to the user, and selecting a recommended user to be recommended to the user from the choices of the users based on the calculated expected value,
wherein

the item selecting unit selects a plurality of items dissimilar to each other from a group of items used by the recommended user, and

the presentation control unit allows the plurality of selected items to be presented to the user together with information about the recommended user.

6. The information processing apparatus according to claim 5, wherein the recommended user selecting unit calculates the expected value based on a probability that the user accepts the choices of users, and variation of a prediction value of an evaluation given by the user for a predetermined group of items, which variation is produced by presentation of feedback given by the choices of users.

7. The information processing apparatus according to claim 6, wherein the recommended user selecting unit calculates the expected value further based on a probability that the choices of users give feedback for respective items included in the predetermined group of items.

8. An information processing method performed by an information processing apparatus, comprising the steps of:

selecting a plurality of items dissimilar to each other from a group of items used by a presented user as a target presented to a user; and
allowing the plurality of selected items to be presented to the user together with information about the presented user.

9. A program implemented by a computer, comprising the steps of:

selecting a plurality of items dissimilar to each other from a group of items used by a presented user as a target presented to a user; and
allowing the plurality of selected items to be presented to the user together with information about the presented user.

# FIG. 1

## FIG. 2

EP 2 849 095 A1

# FIG. 3

STORING UNIT ~33

**CONTENTS LINK CREATION PROCESSING UNIT** ~41

101 — LINK SOURCE CONTENTS SELECTING UNIT

102 — FEATURE VALUE SIGNIFICANCE CALCULATING UNIT

104 — LINK DESTINATION CONTENTS SELECTING UNIT

103 — LINK FEATURE VALUE SELECTING UNIT

105 — CONTENTS LINK CREATING UNIT

COMMUNICATING UNIT — 31

DISPLAY CONTROL UNIT — 52

# FIG. 4

```
                    ┌─────────────────┐
                    │  STORING UNIT   │──33
                    └─────────────────┘
  42                         ↕
┌──────────────────────────────────────────────────────────────────┐
│ RECOMMENDED USER                                                   │
│ SELECTION PROCESSING UNIT                                          │
│    131                                                             │
│  ┌──────────────────────────────────────────────────────────────┐ │
│  │ LEARNING UNIT                                                  │ │
│  │     141            142            143            144           │ │
│  │  ┌──────────┐  ┌──────────┐  ┌──────────┐  ┌──────────┐        │ │
│  │  │EVALUATION│  │   USER   │  │ FEEDBACK │  │ FEEDBACK │        │ │
│  │  │PREDICTION│  │RELATION- │  │PREDICTION│  │EVALUATION│        │ │
│  │  │ LEARNING │  │   SHIP   │  │ LEARNING │  │PREDICTION│        │ │
│  │  │   UNIT   │  │PREDICTION│  │   UNIT   │  │ LEARNING │        │ │
│  │  │          │  │ LEARNING │  │          │  │   UNIT   │        │ │
│  │  │          │  │   UNIT   │  │          │  │          │        │ │
│  │  └──────────┘  └──────────┘  └──────────┘  └──────────┘        │ │
│  └──────────────────────────────────────────────────────────────┘ │
│    132                                                             │
│  ┌──────────────────────────────────────────────────────────────┐ │
│  │ PREDICTING UNIT                                                │ │
│  │     151            152            153            154           │ │
│  │  ┌──────────┐  ┌──────────┐  ┌──────────┐  ┌──────────┐        │ │
│  │  │EVALUATION│  │   USER   │  │ FEEDBACK │  │ FEEDBACK │        │ │
│  │  │PREDICTING│  │RELATION- │  │PREDICTING│  │EVALUATION│        │ │
│  │  │   UNIT   │  │   SHIP   │  │   UNIT   │  │PREDICTING│        │ │
│  │  │          │  │PREDICTING│  │          │  │   UNIT   │        │ │
│  │  │          │  │   UNIT   │  │          │  │          │        │ │
│  │  └──────────┘  └──────────┘  └──────────┘  └──────────┘        │ │
│  └──────────────────────────────────────────────────────────────┘ │
│                          ↓                                         │
│                 ┌─────────────────┐                                │
│                 │ EXPECTED VALUE  │                                │
│                 │  OF VARIATION   │──133                           │
│                 │CALCULATING UNIT │                                │
│                 └─────────────────┘                                │
│                          ↓                                         │
│                 ┌─────────────────┐                                │
│                 │  RECOMMENDED    │                                │
│                 │     USER        │──134                           │
│                 │ SELECTING UNIT  │                                │
│                 └─────────────────┘                                │
└──────────────────────────────────────────────────────────────────┘
                           ↓
                  ┌─────────────────┐
                  │   PRESENTED     │
                  │    MATTERS      │──51
                  │ SETTING UNIT    │
                  └─────────────────┘
```

# FIG. 5

# FIG. 6

12
CLIENT

COMMUNICATING UNIT — 201

206
CONTENTS LINK CREATING UNIT

203
OUTPUT CONTROL UNIT

202
REPRODUCING UNIT

INPUT UNIT
205

OUTPUT UNIT
204

# FIG. 7

```
( CONTENTS LINK CREATING PROCESS START )
                    │
                    ▼
┌─────────────────────────────────────────┐
│  SELECT CHOICES OF LINK SOURCE CONTENTS  │ S1
└─────────────────────────────────────────┘
                    │
                    ▼
┌─────────────────────────────────────────┐
│ PRESENT CHOICES OF LINK SOURCE CONTENTS  │ S2
└─────────────────────────────────────────┘
                    │
                    ▼
┌─────────────────────────────────────────┐
│     DETERMINE LINK SOURCE CONTENTS       │ S3
└─────────────────────────────────────────┘
                    │
                    ▼
┌─────────────────────────────────────────┐
│        CALCULATE SIGNIFICANCE OF         │ S4
│       RESPECTIVE FEATURE VALUES          │
└─────────────────────────────────────────┘
                    │
                    ▼
┌─────────────────────────────────────────┐
│   SELECT CHOICES OF LINK FEATURE VALUE   │ S5
└─────────────────────────────────────────┘
                    │
                    ▼
┌─────────────────────────────────────────┐
│  PRESENT CHOICES OF LINK FEATURE VALUE   │ S6
└─────────────────────────────────────────┘
                    │
                    ▼
┌─────────────────────────────────────────┐
│       DETERMINE LINK FEATURE VALUE       │ S7
└─────────────────────────────────────────┘
                    │
                    ▼
┌─────────────────────────────────────────┐
│        SELECT CHOICES OF LINK            │ S8
│        DESTINATION CONTENTS              │
└─────────────────────────────────────────┘
                    │
                    ▼
┌─────────────────────────────────────────┐
│        PRESENT CHOICES OF LINK           │ S9
│        DESTINATION CONTENTS              │
└─────────────────────────────────────────┘
                    │
                    ▼
┌─────────────────────────────────────────┐
│  DETERMINE LINK DESTINATION CONTENTS     │ S10
└─────────────────────────────────────────┘
                    │
                    ▼
┌─────────────────────────────────────────┐
│      STORE CREATED CONTENTS LINK         │ S11
└─────────────────────────────────────────┘
                    │
                    ▼
                ( END )
```

## FIG. 8

| USER ID | CONTENTS ID | EVALUATION VALUE | NUMBER OF TIMES OF REPRODUCTION |
|---|---|---|---|
| U1 | C1 | 5 | 23 |
| U1 | C2 | 4 | 15 |
| U1 | C3 | 2 | 3 |
| U1 | C4 | 4 | 11 |
| U1 | C5 | N/A | 0 |
| . . . | | | |
| U2 | C2 | 4 | 10 |
| . . . | | | |

## FIG. 9

| CONTENTS ID | FEATURE VALUE | | |
|---|---|---|---|
| | TEMPO | SOUND DENSITY | RHYTHM INSTRUMENTS RATIO |
| C1 | 55 | 39 | 26 |
| C2 | 45 | 60 | 23 |
| C3 | 22 | 30 | 50 |
| C4 | 53 | 69 | 45 |
| . . . | | | |

# FIG. 10

| USER ID | FEATURE VALUE | | |
|---|---|---|---|
| | TEMPO | SOUND DENSITY | RHYTHM INSTRUMENTS RATIO |
| U1 | 0.42 | −0.03 | 0.06 |
| U2 | 0.12 | 0.65 | −0.14 |
| U3 | −0.21 | 0.11 | 0.54 |
| . . . | | | |

# FIG. 11

311-4

create link

311-3
312L
311-1
311-2

301
311-5
312R
311-7
311-6

TITLE A/ARTIST A

313-2

313-1

313-3

314L

LYRICS TEMPO SOUND DENSITY

314R

302

315-4

315-3
316L
315-1
315-2

315-5
316R
315-6
315-7

TITLE B/ARTIST B

303

DECISION

304

# FIG. 12

```
┌─────────────────────────────────┐
│    USER RECOMMENDATION           │
│    LEARNING PROCESS START        │
└─────────────────────────────────┘
                │
                ▼
┌─────────────────────────────────────────────┐  S101
│  PERFORM EVALUATION PREDICTION LEARNING       │
└─────────────────────────────────────────────┘
                │
                ▼
┌─────────────────────────────────────────────┐  S102
│      PERFORM USER RELATIONSHIP                │
│        PREDICTION LEARNING                    │
└─────────────────────────────────────────────┘
                │
                ▼
┌─────────────────────────────────────────────┐  S103
│  PERFORM FEEDBACK PREDICTION LEARNING         │
└─────────────────────────────────────────────┘
                │
                ▼
┌─────────────────────────────────────────────┐  S104
│     PERFORM FEEDBACK EVALUATION              │
│        PREDICTION LEARNING                    │
└─────────────────────────────────────────────┘
                │
                ▼
          ┌───────────┐
          │    END     │
          └───────────┘
```

## FIG. 13

| EVALUATION TARGET TUPLE | CONTENTS FEATURE VALUE | | | | | | | USER FEATURE VALUE | | | | | | FEEDBACK FEATURE VALUE | | | | | |
|---|---|---|---|---|---|---|---|---|---|---|---|---|---|---|---|---|---|---|---|
| | CATEGORY ROCK | CATEGORY POPS | CATEGORY JAZZ | TEMPO | SOUND VOLUME | RHYTHM INSTRUMENTS RATIO | ⋯ | MALE | FEMALE | 20S AND UNDER | 30S | 40S AND OVER | ⋯ | COOL | ! | ⋯ | FEATURE VALUE 4 | FEATURE VALUE 5 | ⋯ |
| (C1, U2, F1) | 1 | 0 | 0 | 40 | 55 | 40 | | 1 | 0 | 0 | 1 | 0 | | 1 | 1 | | 0 | 0 | |
| (C1, U4, F6) | 1 | 0 | 0 | 25 | 35 | 15 | | 1 | 0 | 0 | 1 | 0 | | 0 | 0 | | 0 | 0 | |
| (C3, U3, F7) | 0 | 1 | 1 | 20 | 30 | 25 | | 0 | 1 | 1 | 0 | 0 | | 0 | 0 | | 1 | 0 | |
| ⋯ | | | | | | | | | | | | | | | | | | | |

EP 2 849 095 A1

# FIG. 14

| USER | CONTENTS FEATURE VALUE | | | | | | | USER FEATURE VALUE | | | | | | FEEDBACK FEATURE VALUE | | | | | |
|---|---|---|---|---|---|---|---|---|---|---|---|---|---|---|---|---|---|---|---|
| | CATEGORY ROCK | CATEGORY POPS | CATEGORY JAZZ | TEMPO | SOUND VOLUME | RHYTHM INSTRUMENTS RATIO | ... | MALE | FEMALE | 20S AND UNDER | 30S | 40S AND OVER | ... | COOL | ! | ... | FEATURE VALUE 4 | FEATURE VALUE 5 | ... |
| A1 | 0.85 | 0.20 | −0.42 | 0.021 | 0.152 | 0.002 | | 0.51 | 0.22 | 0.11 | 0.53 | 0.33 | | 0.79 | 0.35 | | 1.24 | 0.80 | |
| A2 | | | | | | | | 0.13 | 0.74 | ... | | | | | | | | | |
| A3 | | | | | | | | 0.53 | 0.55 | ... | | | | | | | | | |
| ... | | | | | | | | | | | | | | | | | | | |

# FIG. 15

```
         ┌────────────────────────┐
         │     CONTENTS LINK       │
         │ SHARING PROCESS START   │
         └────────────────────────┘
                     │
                     ▼
   ┌──────────────────────────────────┐
   │  RECOMMENDED USER RANKING         │  S201
   │      CREATING PROCESS             │
   └──────────────────────────────────┘
                     │
                     ▼
   ┌──────────────────────────────────┐
   │  CREATE RECOMMENDED USER LIST     │  S202
   └──────────────────────────────────┘
                     │
                     ▼
   ┌──────────────────────────────────┐
   │   CREATE CONTENTS LINK LIST       │  S203
   └──────────────────────────────────┘
                     │
                     ▼
   ┌──────────────────────────────────┐
   │   CREATE HISTORY-RELATED LIST     │  S204
   └──────────────────────────────────┘
                     │
                     ▼
   ┌──────────────────────────────────┐
   │     PRESENTED CONTENTS            │  S205
   │      SELECTING PROCESS            │
   └──────────────────────────────────┘
                     │
                     ▼
   ┌──────────────────────────────────┐
   │ PRESENT CONTENTS LINK AND THE LIKE│  S206
   └──────────────────────────────────┘
                     │
                     ▼
              ┌────────────┐
              │    END     │
              └────────────┘
```

## FIG. 16

```
( RECOMMENDED USER SELECTING PROCESS START )
                        │
                        ▼
┌─────────────────────────────────────────────┐  S231
│           PREDICT EVALUATION GIVEN BY        │
│     ACTIVE USER FOR RESPECTIVE CONTENTS      │
└─────────────────────────────────────────────┘
                        │
                        ▼
┌─────────────────────────────────────────────┐  S232
│  SELECT ONE USER NOT SELECTED AS TARGET USER │
│    FROM USERS NOT FOLLOWED BY ACTIVE USER    │
└─────────────────────────────────────────────┘
                        │
                        ▼
┌─────────────────────────────────────────────┐  S233
│           PREDICT PROBABILITY THAT           │
│         ACTIVE USER ACCEPT TARGET USER       │
└─────────────────────────────────────────────┘
                        │
                        ▼
┌─────────────────────────────────────────────┐  S234
│       PREDICT PROBABILITY THAT TARGET USER   │
│      GIVE FEEDBACK FOR RESPECTIVE CONTENTS   │
└─────────────────────────────────────────────┘
                        │
                        ▼
┌─────────────────────────────────────────────┐  S235
│    PREDICT EVALUATION VALUE GIVEN BY ACTIVE  │
│  USER FOR RESPECTIVE CONTENTS PRESENTED      │
│  TOGETHER WITH FEEDBACK FROM TARGET USER     │
└─────────────────────────────────────────────┘
                        │
                        ▼
            DOES USER NOT SELECTED            S236
 YES  / FOR TARGET USER REMAIN IN USERS \
 ◄───<    NOT FOLLOWED BY ACTIVE USER?    >
            \                           /
                        │ NO
                        ▼
┌─────────────────────────────────────────────┐  S237
│      CALCULATE EXPECTED VALUE OF VARIATION   │
└─────────────────────────────────────────────┘
                        │
                        ▼
┌─────────────────────────────────────────────┐  S238
│        CREATE RECOMMENDED USER RANKING       │
└─────────────────────────────────────────────┘
                        │
                        ▼
                   ( RETURN )
```

# FIG. 17

| CONTENTS ID | PREDICTED EVALUATION VALUE $r_{uc}$ |
|---|---|
| C11 | 4.13 |
| C12 | 2.21 |
| C13 | 5.46 |
| C14 | 3.30 |
| . . . | |

# FIG. 18

| USER ID | USER ACCEPTANCE PROBABILITY $P(v|u)$ |
|---|---|
| U11 | 0.49 |
| U12 | 0.11 |
| U13 | 0.63 |
| U14 | 0.61 |
| . . . | . . . |

# FIG. 19

| CONTENTS ID | USER ID | FEEDBACK PREDICTED EVALUATION VALUE $r_{uc}(f, v)$ |
|---|---|---|
| C11 | U11 | 5.24 |
| C12 | U11 | 2.54 |
| C13 | U11 | N/A |
| C14 | U11 | 3.02 |
| . . . | | |
| C11 | U12 | N/A |
| C12 | U12 | 5.73 |
| C13 | U12 | 5.31 |
| C14 | U12 | N/A |
| . . . | | |

# FIG. 20

```
( PRESENTED CONTENTS SELECTING PROCESS START )
```

| SELECT ONE USER WHOSE PRESENTED CONTENTS ARE NOT SELECTED FROM PRESENTED USERS | S261 |

| EXTRACT CONTENTS GROUP AS CHOICES OF PRESENTATION | S262 |

| CALCULATE DISTANCES BETWEEN RESPECTIVE CONTENTS INCLUDED IN EXTRACTED CONTENTS GROUP | S263 |

| SELECT HEAD-PRESENTED CONTENTS | S264 |

| SELECT DISSIMILAR CONTENTS IN PRESENTED CONTENTS GROUP | S265 |

| DETERMINE OVERLAP BETWEEN SELECTED CONTENTS AND PRESENTED CONTENTS OF PRESENTED USERS | S266 |

DO SELECTED CONTENTS OVERLAP WITH PRESENTED CONTENTS OF OTHER PRESENTED USER? — S267 / YES

NO

| ADD SELECTED CONTENTS TO PRESENTED CONTENTS GROUP | S268 |

NO / DO PRESENTED CONTENTS REACH PREDETERMINED NUMBER? — S269

YES

NO / HAVE PRESENTED CONTENTS OF ALL PRESENTED USERS BEEN SELECTED? — S270

YES

| SUPPLY SELECTION RESULT OF PRESENTED CONTENTS | S271 |

```
( RETURN )
```

# FIG. 21

| CONTENTS ID | REPRODUCTION NUMBER OF TIMES BY RESPECTIVE USERS | |
|---|---|---|
| | U1 | U11 |
| C11 | 23 | 17 |
| C12 | 15 | 21 |
| C13 | 3 | 3 |
| C14 | 11 | 10 |
| C15 | 0 | 41 |
| C16 | 31 | 15 |
| C17 | 17 | 8 |
| . . . | | |

# FIG. 22

| CONTENTS ID | FEATURE VALUE | | |
|---|---|---|---|
| | TEMPO | SOUND DENSITY | RHYTHM INSTRUMENTS RATIO |
| C11 | 55 | 39 | 26 |
| C12 | 45 | 60 | 23 |
| C14 | 22 | 30 | 50 |
| C16 | 53 | 69 | 45 |
| C17 | 25 | 47 | 38 |
| . . . | | | |

## FIG. 23

|      | C11 | C12  | C14  | C16  | C17  |
|------|-----|------|------|------|------|
| C11  | –   | 23.5 | 41.8 | 35.6 | 33.3 |
| C12  | –   | –    | 46.5 | 25.1 | 28.2 |
| C14  | –   | –    | –    | 50.1 | 21.0 |
| C16  | –   | –    | –    | –    | 36.3 |
| C17  | –   | –    | –    | –    | –    |

## FIG. 24

## FIG. 25

# FIG. 26

421a — ARTIST A → ARTIST B

422a — LINK BY RHYTHM DEVELOPMENT

423a / 424a — USER A
sharing with you: — 425a

421b — ARTIST C → ARTIST D

422b — MY STANDARD COMBO TO EASE BROKEN HEART — 443b / 444b — USER B
sharing with you: — 425b

421d — ARTIST G → ARTIST H

NOS. 1&2 IN ALBUM: INCREDIBLE DEVELOPMENT — 424d — USER D
sharing with you: — 425d
423d

421c — ARTIST E → ARTIST F

422c / 423c / 424c — USER C
sharing with you: — 425c

422d

EP 2 849 095 A1

## FIG. 27

TITLE A/ARTIST A
★★★★☆ REPRODUCTION: 103 TIMES

ARTIST B

LINK BY POLYRHYTHM

USER B
sharing with you:

ARTIST C

· · ·

USER C
sharing with you:

TITLE D/ARTIST D
★★★★★ REPRODUCTION: 45 TIMES

ARTIST E

LYRICS ON THE SUBJECT FROM DIFFERENT VIEW

USER D
sharing with you:

EP 2 849 095 A1

# FIG. 28

EP 2 849 095 A1

<div align="center">

**INTERNATIONAL SEARCH REPORT**

</div>

| | International application No. |
|---|---|
| | PCT/JP2013/062167 |

**A. CLASSIFICATION OF SUBJECT MATTER**
*G06F17/30*(2006.01)i

According to International Patent Classification (IPC) or to both national classification and IPC

**B. FIELDS SEARCHED**

Minimum documentation searched (classification system followed by classification symbols)
G06F17/30

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | Yuki OGAWA, "Recommendation Algorithm for Improving Novelty Based on Dynamic Topic Classification", Transactions of Information Processing Society of Japan [CDROM], vol.50, no.6, Information Processing Society of Japan, 15 June 2009 (15.06.2009), pages 1636 to 1648 | 1-4,8,9<br>5-7 |
| Y<br>A | JP 2001-14349 A (Nippon Telegraph and Telephone Corp.), 19 January 2001 (19.01.2001), paragraph [0037] (Family: none) | 1-4,8,9<br>5-7 |
| A | JP 2009-157907 A (Sony Corp.), 16 July 2009 (16.07.2009), paragraphs [0075] to [0084]; fig. 8 & US 2009/0144226 A1 & CN 101452472 A | 1-9 |

| ☐ Further documents are listed in the continuation of Box C. | ☐ See patent family annex. |
|---|---|

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>    14 June, 2013 (14.06.13) | Date of mailing of the international search report<br>    25 June, 2013 (25.06.13) |
|---|---|
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012003359 A
- JP 2011168975 A

**Non-patent literature cited in the description**

- **TIBSHIRANI, R.** Regression Shrinkage and Selection via the Lasso. *Journal of the Royal Statistical Society, Series B,* 1996, vol. 58 (1
- **YANG, L.** *Distance Metric Learning: A Comprehensive Survey,* 2006
- **SU, X. ; KHOSHGOFTAAR, T. M.** A survey of Collaborative Filtering Techniques. *Advances in Artificial Intelligence,* 2009, vol. 2009
- A Survey of Link Prediction in Social Networks. **HASAN, M. A. ; ZAKI, M. J.** Social Network Data Analytics. Springer, 2011
- **ZHANG, Y. et al.** Sentiment Analysis for Online Reviews Using an Author-Review-Object Model. *Asia Information Retrieval Societies Conference,* 2011
- **BISHOP C. M.** Pattern Recognition and Machine Learning. Springer-Verlag, 2006